# EUROPEAN PATENT APPLICATION

(11) **EP 4 303 782 A1**
(43) Date of publication of application: **10.01.2024**
(21) Application number: 22306015.3
(22) Date of filing: 07.07.2022
(51) Int. Cl.: G06Q 10/02, G06Q 50/14, G06Q 10/06

(54) **DEVICE, SYSTEM AND METHOD FOR ALTERING DATA CONTAINERS TO CONTROL COMMUNICATION DEVICES**

(71) Applicant: Amadeus S.A.S., 06410 Biot (FR)
(72) Inventor: GUILLON, Nicolas, 06250 Mougins (FR); LOPEZ RUIZ, Eduardo Rafael, 06160 Antibes (FR); DA CRUZ, Jose, 19015-030 Presidente Prudente (BR); GRIEHSER, Samuel, 06300 Nice (FR)
(74) Representative: Samson & Partner Patentanwälte mbB

(57) **Abstract**

A device, system and method altering data containers to control communication devices are provided. A computing device: receives data associated with a data container, which defines given event associated with respective probabilities at the data container, the given events comprising respective criteria to control a communication device to perform respective given actions associated with the one or more given events; and alters the data container based on the data, by altering one or more of: a probability, a given action and criteria associated with a given event. When the probability meets a given threshold condition, the communication device is controlled to perform the given action based on the criteria. When the probability does not meet the given threshold condition the communication device is controlled to one or more of: decline to perform the given action; inquire as to whether the given event occurred; and perform a further given action.

## Description

### FIELD

The specification relates generally to altering data containers, and specifically to a device, system and method for altering data containers to control communication devices.

### BACKGROUND

Communication devices may be used to collect various types of information, for example to keep records of events. However, such information collection may be inefficient, and/or operation of a communication device for such information collection may be inefficient, for example when incomplete information collection occurs and/or when the communication device is operated to collect information that may be irrelevant to a given event. Such inefficient operation may lead to a waste of processing resources at the communication device and/or a waste of bandwidth between the communication device and servers that store collected information.

### SUMMARY

A first aspect of the present specification provides a method comprising: receiving, at one or more computing devices, data associated with a data container, the data container defining one or more given events, the one or more given events associated with respective probabilities at the data container, the one or more given events comprising respective criteria to control a communication device to perform respective given actions associated with the one or more given events; altering, at the one or more computing devices, the data container based on the data, by altering one or more of: a probability, a given action and criteria associated with a given event; when the probability meets a given threshold condition, controlling, via the one or more computing devices, the communication device to perform the given action associated with the given event based on the criteria; when the probability does not meet the given threshold condition, controlling, via the one or more computing devices, the communication device to one or more of: decline to perform the given action; inquire as to whether the given event occurred; and perform a further given action.

At the method of the first aspect, the respective criteria associated with the given action may comprises one or more of: a time for the communication device to perform the given action; a location for the communication device to perform the given action; and a detected activity or given data, received in the data, that triggers the communication device to perform the given action.

The method of the first aspect may further comprise: when the probability meets the given threshold condition, and when the given action includes requesting given input: receiving the given input; and providing the given input to an input processing device for one or more of processing and storage. The given input associated with the given event requested by the communication device may comprise one or more of: a confirmation that the given event occurred, wherein details of the given event are received in the data; and a record of the given event, the record providing the details that are missing in the data.

The method of the first aspect may further comprise: when the probability meets the given threshold condition, and when the given action is not associated with input: controlling the communication device to provide a notification associated with the given action.

The method of the first aspect may further comprise: when the probability does not meet the given threshold condition, and when the communication device indicates that the given event occurred, controlling the communication device to request given input.

The method of the first aspect may further comprise: at a time that is at a given time, or later than respective times associated with respective given events associated with probabilities that do not meet the given threshold condition, controlling the communication device to inquire as to whether the respective given events occurred; and when one or more of the respective given events occurred, controlling the communication device to request associated given input.

At the method of the first aspect, the data may comprise one or more of: an indication of a transaction associated with the given event; a travel-based indication associated with the given event; and a location-based indication that the communication device was located at a given type of location associated with the given event.

The method of the first aspect may further comprise: controlling the communication device to confirm a type of the data container; and when the communication device indicates that the type of the data container is incorrect, one or more of retrieving and generating a different type of the data container, as indicated by the communication device.

The method of the first aspect may further comprise: one or more of selecting and generating the data container based on initial received data.

The method of the first aspect may further comprise: synchronizing the data container with a respective data container stored on the communication device.

A second aspect of the specification further provides a device comprising: a communication interface; and a controller configured to: receive, via the communication interface, data associated with a data container, the data container defining one or more given events, the one or more given events associated with respective probabilities at the data container, the one or more given events comprising respective criteria to control a communication device to perform respective given actions associated with the one or more given events; alter the data container based on the data, by altering one or more of: a probability, a given action and criteria associated with a given event; when the probability meets a given threshold condition, control, via the communication interface, the communication device to perform the given action associated with the given event based on the criteria; when the probability does not meet the given threshold condition, control, via the communication interface, the communication device to one or more of: decline to perform the given action; inquire as to whether the given event occurred; and perform a further given action.

At the device of the second aspect, the respective criteria associated with the given action may comprise one or more of: a time for the communication device to perform the given action; a location for the communication device to perform the given action; and a detected activity or given data, received in the data, that triggers the communication device to perform the given action.

At the device of the second aspect, the controller may be further configured to: when the probability meets the given threshold condition, and when the given action includes requesting given input: receive the given input; and provide the given input to an input processing device for one or more of processing and storage. The given input associated with the given event requested by the communication device may comprise one or more of: a confirmation that the given event occurred, wherein details of the given event are received in the data; and a record of the given event, the record providing the details that are missing in the data.

At the device of the second aspect, the controller may be further configured to: when the probability meets the given threshold condition, and when the given action is not associated with input: control the communication device to provide a notification associated with the given action.

At the device of the second aspect, the controller may be further configured to: when the probability does not meet the given threshold condition, and when the communication device indicates that the given event occurred, control the communication device to request given input.

At the device of the second aspect, the controller may be further configured to: at a time that is at a given time, or later than respective times associated with respective given events associated with probabilities that do not meet the given threshold condition, control the communication device to inquire as to whether the respective given events occurred; and when one or more of the respective given events occurred, control the communication device to request associated given input.

At the device of the second aspect, the data may comprise one or more of: an indication of a transaction associated with the given event; a travel-based indication associated with the given event; and a location-based indication that the communication device was located at a given type of location associated with the given event.

At the device of the second aspect, the controller may be further configured to: control the communication device to confirm a type of the data container; and when the communication device indicates that the type of the data container is incorrect, one or more of retrieve and generate a different type of the data container, as indicated by the communication device.

At the device of the second aspect, the controller may be further configured to: one or more of select and generate the data container based on initial received data.

At the device of the second aspect, the controller may be further configured to: synchronize the data container with a respective data container stored on the communication device.

A third aspect of the specification provides a non-transitory computer-readable medium storing a computer program, wherein execution of the computer program is to implement a method comprising: receiving, at one or more computing devices, data associated with a data container, the data container defining one or more given events, the one or more given events associated with respective probabilities at the data container, the one or more given events comprising respective criteria to control a communication device to perform respective given actions associated with the one or more given events; altering, at the one or more computing devices, the data container based on the data, by altering one or more of: a probability, a given action and criteria associated with a given event; when the probability meets a given threshold condition, controlling, via the one or more computing devices, the communication device to perform the given action associated with the given event based on the criteria; when the probability does not meet the given threshold condition, controlling, via the one or more computing devices, the communication device to one or more of: decline to perform the given action; inquire as to whether the given event occurred; and perform a further given action.

At the method of the third aspect, the respective criteria associated with the given action may comprises one or more of: a time for the communication device to perform the given action; a location for the communication device to perform the given action; and a detected activity or given data, received in the data, that triggers the communication device to perform the given action.

The method of the third aspect may further comprise: when the probability meets the given threshold condition, and when tfhe given action includes requesting given input: receiving the given input; and providing the given input to an input processing device for one or more of processing and storage. The given input associated with the given event requested by the communication device may comprise one or more of: a confirmation that the given event occurred, wherein details of the given event are received in the data; and a record of the given event, the record providing the details that are missing in the data.

The method of the third aspect may further comprise: when the probability meets the given threshold condition, and when the given action is not associated with input: controlling the communication device to provide a notification associated with the given action.

The method of the third aspect may further comprise: when the probability does not meet the given threshold condition, and when the communication device indicates that the given event occurred, controlling the communication device to request given input.

The method of the third aspect may further comprise: at a time that is at a given time, or later than respective times associated with respective given events associated with probabilities that do not meet the given threshold condition, controlling the communication device to inquire as to whether the respective given events occurred; and when one or more of the respective given events occurred, controlling the communication device to request associated given input.

At the method of the third aspect, the data may comprise one or more of: an indication of a transaction associated with the given event; a travel-based indication associated with the given event; and a location-based indication that the communication device was located at a given type of location associated with the given event.

The method of the third aspect may further comprise: controlling the communication device to confirm a type of the data container; and when the communication device indicates that the type of the data container is incorrect, one or more of retrieving and generating a different type of the data container, as indicated by the communication device.

The method of the third aspect may further comprise: one or more of selecting and generating the data container based on initial received data.

The method of the third aspect may further comprise: synchronizing the data container with a respective data container stored on the communication device.

### BRIEF DESCRIPTIONS OF THE DRAWINGS

For a better understanding of the various examples described herein and to show more clearly how they may be carried into effect, reference will now be made, by way of example only, to the accompanying drawings in which:
FIG. 1 depicts a system for altering data containers to control communication devices, according to non-limiting examples.
FIG. 2 depicts an example computing device for altering data containers to control communication devices, according to non-limiting examples.
FIG. 3 depicts an example data container, according to non-limiting examples.
FIG. 4 depicts a method for altering data containers to control communication devices, according to non-limiting examples.
FIG. 5 depicts the system of FIG. 1 implementing aspects of a method for altering data containers to control communication devices, according to non-limiting examples.
FIG. 6 depicts the data container of FIG. 3 altered according to data received at a computing device , according to non-limiting examples.
FIG. 7 depicts the system of FIG. 1 implementing further aspects of a method for altering data containers to control communication devices, according to non-limiting examples.
FIG. 8 depicts the system of FIG. 1 implementing further aspects of a method for altering data containers to control communication devices, according to non-limiting examples.
FIG. 9 depicts the system of FIG. 1 implementing further aspects of a method for altering data containers to control communication devices, according to non-limiting examples.
FIG. 10 depicts the data container of FIG. 3 further altered according to data received at a computing device , according to non-limiting examples.
FIG. 11 depicts the system of FIG. 1 implementing further aspects of a method for altering data containers to control communication devices, according to non-limiting examples.
FIG. 12 depicts the communication device of the system of FIG. 1 inquiring whether events defined by a data container occurred, according to non-limiting examples.
FIG. 13 depicts the communication device of the system of FIG. 1 showing a timeline Graphic User Interface of events defined by a data container, according to non-limiting examples.

### DETAILED DESCRIPTION

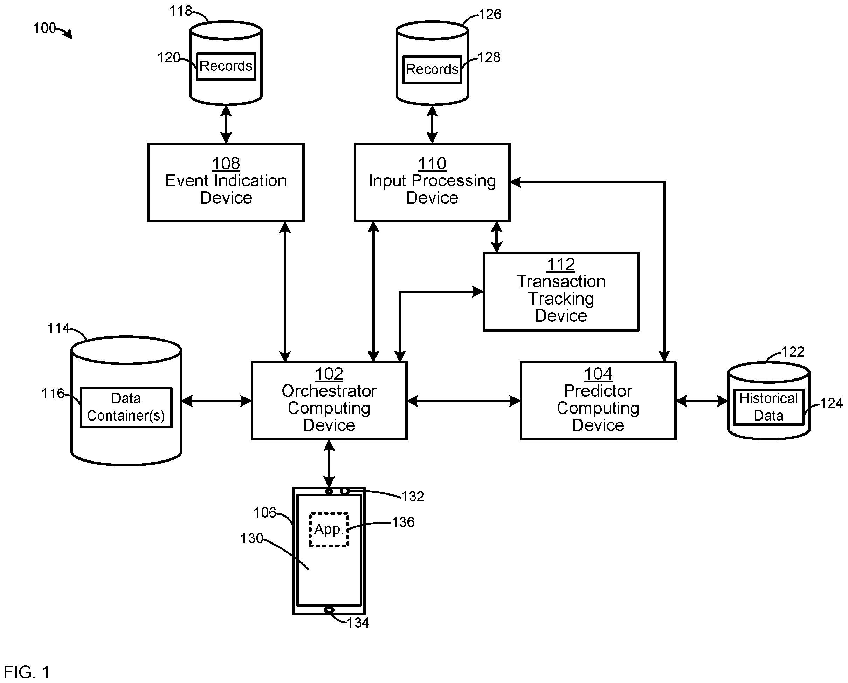

FIG. 1 depicts a system 100 for altering data containers to control communication devices. The various components of the system 100 are understood to be in communication via any suitable combination of wired and/or wireless communication links. Communication links between components of the system 100 are depicted in FIG. 1, and throughout the present specification, are depicted as double-ended arrows between respective components; the communication links may include any suitable combination of wireless and/or wired links and/or wireless and/or wired communication networks, and the like.

As depicted, the system 100 comprises an orchestrator computing device 102, a predictor computing device 104, a communication device 106 (which may also comprise a computing device), an event indication device 108, and an input processing device 110. As depicted, the orchestrator computing device 102 and the input processing device 110 are in communication with a transaction tracking device 112 which may be a component of the system 100 (e.g. as depicted), or external to the system 100.

As depicted, the orchestrator computing device 102 has access to a memory 114 storing one or more data containers 116. The one or more data containers 116 may be preconfigured and stored at the memory 114 by an administrator of the system 100 and/or the one or more data containers 116 may be generated by a component of the system 100, such as the orchestrator computing device 102. Indeed, a data container 116 may further be generated when events are detected by the event indication device 108 (e.g. on the basis of records stored at a memory as described in more detail below. However, data containers 116 may be generated in other situations, for example using input received from the communication device 106 and/or the input processing device 110 and/or the transaction processing device 116, and the like.

A given data container 116 may generally define one or more given events, the one or more given events associated with respective probabilities at the given data container 116, the one or more given events comprising respective criteria to control a communication device (e.g. such as the orchestrator computing device 102 controlling the communication device 106 via a given data container 116), to perform respective given actions associated with the one or more given events. However, as will be described in more detail below, initially, probabilities indicated by the one or more data containers 116 stored at the memory 114 may be blank and/or fields of the one or more data containers 116 for probabilities may be blank, and later filled in by the predictor computing device 104. Similarly, some details of given actions and/or some details of criteria for controlling a communication device, and the like, may be blank and/or fields of the one or more data containers 116 for some details of given actions and/or criteria may be blank, and later filled in by the predictor computing device 104 and/or the orchestrator computing device 102.

Hereafter control of communication devices is described with respect to the communication device 106, though control of other communication devices is within the scope of the present specification. Indeed, the system 100 may include any suitable number of communication devices that may be controlled via the orchestrator computing device 102. As such, the orchestrator computing device 102 may be referred to as orchestrating and/or controlling the communication device 106, and/or other communication devices, via a data container 116.

Given actions for a given event of a data container 116 may include, but are not limited to, controlling the communication device 106 to provide certain notifications associated with a given event, controlling the communication device 106 to request given input associated with an action, and/or any other suitable actions, and the like.

Put another way, some given actions of given events defined by a data container 116 may include controlling the communication device 106 to provide certain notifications, while other given actions of given events defined by a data container 116 may include controlling the communication device 106 to request given input and/or collect certain types of given input and the like, for example using a camera of the communication device 106 and/or any other suitable input device of the communication device 106, for example to collect images, videos, files, and the like that may be used to document given events. In some examples, controlling the communication device 106 to request given input and/or collect certain types of given input and the like may include, but is not limited to: controlling the communication device 106 to provided portions of given input for operator completion (e.g. via user field completion techniques such that an operator of the communication device 106 completes the given input); providing given input at the communication device 106 (e.g. at display screen of the communication device 106) for validation by an operator of the communication device 106; providing a list of selectable given input at the communication device 106 (e.g. at display screen of the communication device 106) for selection by an operator of the communication device 106; and the like. Indeed, given input may be collected and/or received at the communication device 106 in any suitable manner.

In some examples, given actions may be automated and/or at least partially automated, which may include, but are not limited to: controlling the communication device 106 to automatically being tracking mileage, and/or distances travelled, and the like, when certain conditions are met. However, in other examples, other given actions for a given event of a data container 116 may include controlling the input processing device 110 to perform the given action, such as initiating generation of records associated with the data container 116 for storage at a memory as described in more detail below.

Furthermore, the respective probabilities associated with given events of a data container 116 (e.g. as at least initially determined by the predictor computing device 104) may be used to determine whether or not, and/or when, to control the communication device 106 to perform actions associated with the given events. Such a determination may be threshold based, for example, such that when a probability of a given event is above a given threshold, the communication device 106 is controlled to perform a given action associated with the given event based on the criteria to control the communication device 106; conversely, when a probability of a given event is below the given threshold, the communication device 106 is controlled to one or more of: decline to perform the given action; inquire as to whether the given event occurred; and perform a further given action. However, any suitable given threshold condition is within the scope of the present specification.

Herein, probabilities will be referred to as being between 0%, which indicates that there is no chance of a given event occurring to 100%, which indicates a given event is occurring and/or has already occurred. Probabilities between 0% and 100% indicate a respective chance and/or estimation that a given event may occur. Similarly, thresholds referred to herein are similarly between 0% (inclusive) and 100% (inclusive) though typically a threshold may be between 50% and 90%, and it is understood that such thresholds may be adjusted. However, while percentages are used herein to define probabilities and thresholds, probabilities and thresholds may be defined in any suitable manner, and/or have any suitable units and/or values. Alternatively, any suitable threshold condition may be used, which may be machine learning based.

Criteria associated with a given event may include, but is not limited to, a time for performing an associated action, a location (e.g. defined using geofencing techniques) of the communication device 106 at which a given action is to be performed, detected activity or given data, received in data at the orchestrator computing device 102, that triggers the communication device 106 to perform the given action, and the like. Such criteria will be described in more detail below.

Furthermore, details of a given action may be based on certain rules imposed on the communication device 106, as described in more detail below.

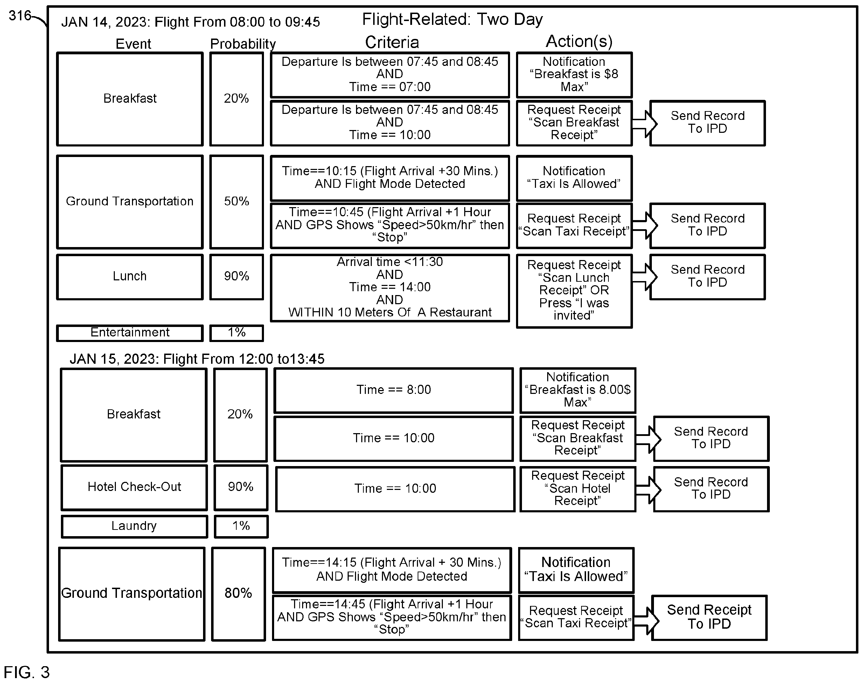

The orchestrator computing device 102 is generally configured to receive data associated with a data container 116 and alter the data container 116 based on the data. It is understood in such examples that the orchestrator computing device 102 has retrieved the data container 116 from the memory 114, and/or generated the data container 116, and that initial probabilities and details of given actions and/or criteria have been populated at the retrieved and/or generated data container 116. An example of a retrieved and/or generated data container 116 is described with respect to FIG. 3.

The orchestrator computing device 102 may alter the data container 116 by altering one or more of: a probability, a given action and criteria associated with a given event defined by a data container 116.

For example, a probability of a data container 116 may be altered, a time and/or location of criteria may be altered, a type of requested input of an action may altered, amongst other possibilities.

Hence, altering one or more of: a probability, a given action and criteria associated with a given event defined by a data container 116 may change the behavior of the communication device 106 (e.g. relative to initially determined probabilities, and/or initially determined given actions and/or initially determined criteria) such that the processing resources and/or bandwidth of the communication device 106 may be used more efficiently.

For example, using a programmatic threshold example, if a probability of an event was initially above a given threshold, but the data received at the orchestrator computing device 102 causes the probability to be below the given threshold, an associated action may be changed and/or may not be implemented. Similarly, if a probability of an event was initially below a given threshold, but the data received at the orchestrator computing device 102 causes the probability to be above the given threshold, an associated action may be changed and/or may be implemented (e.g. as opposed to not being implemented). Similarly, using a machine learning based example, if a probability of an event initially met a given threshold condition, but the data received at the orchestrator computing device 102 causes the probability to not meet the given threshold condition, an associated action may be changed and/or may not be implemented. Similarly, if a probability of an event initially did not meet a given threshold condition, but the data received at the orchestrator computing device 102 causes the probability to meet the given threshold condition, an associated action may be changed and/or may be implemented (e.g. as opposed to not being implemented).

Similarly, if a time of a set of criteria was initially at a first time, the time for the set of criteria may be altered to a second earlier time, for example closer to a predicted time of an event such that given input for the event may be collected at a time closer to the event, which may improve the chances of the event being accurately documented.

Similarly, if a type of requested input for a given action was initially of a first type, the type of requested input may be altered to a second type, for example a type that may more accurately document an associated given event, and/or which may confirm certain data that has already been received, and which documents the associated given event.

Such altering may be based on data received at the orchestrator computing device 102, and such data may be from one or more of the event indication device 108, the input processing device 110, the transaction tracking device 112, the communication device 106 and/or any other suitable data source, and is described in more detail below.

As previously mentioned, it is understood probabilities of the data containers 116, criteria of the data containers 116 (e.g. times, locations, and the like), and the like, may initially be blank at least as stored at the memory 114, and/or data containers 116, at least as stored at the memory 114, may initially include placeholder fields that are to be populated using the predictor computing device 104.

It is further understood that different types of data containers 116 may be stored at the memory 114, which may define different combinations of given events for different time periods. For example, one data container 116 stored at the memory 114 may define one or more given events which are understood to all occur during part of a day (e.g. over a designated lunch time period), another data container 116 stored at the memory 114 may define one or more given events which are understood to all occur on one day, while another data container 116 stored at the memory 114 may define a plurality of given events which are understood to all occur over two consecutive days, etc. Indeed, different data containers 116 may be for different periods of time, such as one hour, one day, two days, one week, two weeks, a given range of dates, amongst other possibilities.

Similarly, different data containers 116 may be for different types of given events including, but not limited to, different types of travel-related events. For example, one data container 116 stored at the memory 114 may define one or more flight-related events, another data container 116 stored at the memory 114 may define one or more personal vehicle-related events, while another data container 116 stored at the memory 114 may define one or more ground transportation (e.g. car and/or taxi and/or limousine)-related events, while yet a further data container 116 stored at the memory 114 may define one or more train-related events. Similarly, another data container 116 stored at the memory 114 may define hotel-related events. Other data containers 116 may define different combination of travel-related events, such as a combination of flight-related events, personal vehicle-related events, ground transportation-related events, hotel-related events, amongst other possibilities. In some examples

Similarly, different data containers 116 may be for any other suitable types of events including, but not limited to, meal-related events. For example, one data container 116 stored at the memory 114 may define one or more breakfast-related events, while another data container 116 stored at the memory 114 may define one or more lunch-related events, while yet a further data container 116 stored at the memory 114 may define one or more dinner-related events. Other data containers 116 may define different combination of dinner-related events, such as a combination of breakfast-related events, lunch-related events and dinner-related events, amongst other possibilities.

Similarly, different data containers 116 may be for any other suitable combinations of events, such as a combination of travel-related events and meal-related events, that occur over different time periods.

However, data containers 116 may for other types of events and/or combinations thereof, including, but are not limited to, personal events (e.g. related to birthdays, weddings, anniversaries, and the like), entertainment-related events (e.g. drinks, concerts, sporting events, amongst other possibilities) and the like.

Selecting a data container 116 to retrieve from the memory 114, and/or generating a data container 116, and initially populating fields of the selected data container 116, may occur via the orchestrator computing device 102, the predictor computing device 104, and the event indication device 108, amongst other possibilities, and is as next described.

For example, the event indication device 108 may have access to a memory 118 storing one or more records 120 of planned events that may occur in association with the communication device 106, such as any of the aforementioned event types, amongst other possibilities. Such records 120 may indicate types and/or combinations of planned events, and/or periods of time over which such planned events, occur, and the like. Indeed, while not depicted, the event indication device 108 may be in communication with the communication device 106, and/or any other suitable device (e.g. associated with an operator of the communication device 106), any of which may indicate, to the event indication device 108, planned events associated with the communication device 106. In some examples, the event indication device 108 may further be used to plan and or book planned events, including, but no limited to, the aforementioned travel-related, meal-related events, and the like. Furthermore, the records 120 may include identifiers of the communication device 106 (e.g. a name of an operator of the communication device 106, an employee number of the operator, a network address of the communication device 106, and the like). As such, the orchestrator computing device 102 may receive one or more of the records 120 and determine that planned events indicated by the one or more of the records 120 are associated with the communication device 106 and/or time periods over which such planned events may occur.

The orchestrator computing device 102 may accordingly retrieve a data container 116 from the memory 114 that is for a time period indicated by the one or more records 120 and/or which includes one or more given events that correspond to the one or more planned events indicated by the records 120. The orchestrator computing device 102 may then communicate with the predictor computing device 104 to determine initial probabilities and/or initial details of given actions and/or criteria and populate the blank fields of the retrieved data container 116 accordingly. Alternatively, and/or in addition, the orchestrator computing device 102 may generate a data container 116 accordingly.

Alternatively, and/or in addition, retrieval and/or generation of a data container 116 may be based on data received from the communication device 106 and/or the transaction tracking device 112.

For example, prior to a data container 116 being retrieved and/or generated, an operator of the communication device 106 may operate the communication device 106 to upload a record of an event to the input processing device 110 (e.g. for processing and/or storage as described in more detail below), the uploading occurring via the orchestrator computing device 102 for example. Based on a type of the record and/or time of the upload, and/or location of the communication device 106, and the like, the orchestrator computing device 102 may determine that the operator of the communication device 106 is engaging in certain types of events that occur over a given time period, and retrieve and/or generate a data container 116 accordingly. Alternatively, and/or in addition, prior to a data container 116 being retrieved and/or generated, the orchestrator computing device 102 may receive data from the transaction tracking device 112 that records and/or documents an event associated with the communication device 106 and retrieves and/or generate a data containers 116 accordingly

However, it is understood that, in these examples, the orchestrator computing device 102 may be estimating such types of events and/or estimating the given time period use to retrieve and/or generate a data container 116. As such, in some examples, the orchestrator computing device 102 may wait for other data from the communication device 106 and/or any other suitable data source, such as the event indication device 108 and/or the transaction tracking device 112, before retrieving and/or generating a data container 116.

Attention is next directed to the predictor computing device 104, which has access to a memory 122 storing historical data 124, which may indicate whether previous planned events, associated with the communication device 106 and/or other communication devices, occurred or did not occur. In particular, the historical data 124 may indicate whether certain given events indicated by one or more of the data containers 116 previously occurred or did not occur, and may further indicate associated criteria under which certain given events occurred or did not occur. For example, the historical data 124 may indicate that a meal-related event occurred but only when certain other events occurred and/or only when such certain other events occurred at given times before or after the meal-related event.

Alternatively, and/or in addition, the historical data 124 may indicate when notifications were previously provided at one or more communication devices and any subsequent information of an associated event collected after the notifications. Similarly, the historical data 124 may indicate when requests for given input, associated with an event, were responded to at the communication device 106, and/or other communication devices, as well any subsequent given input collected.

Put another way, the historical data 124 may indicate patterns that occurred at one or more communication devices that lead to efficient collection of information associated with events. Such efficient collection may be indicated by whether all, or only some, requests for given input (e.g. at given times and/or at given locations) were responded to at one or more communication devices, for example when the one or more communication devices were previously controlled using one or more data containers 116, and/or whether notifications (e.g. at given times and/or at given locations) provided at one or more communication devices lead to collection of information for all, or only some, given events indicated by one or more data containers 116.

Hence, the historical data 124 may be used by the predictor computing device 104 to assign initial probabilities to given events defined by a data container 116, as well as to determine initial details of given actions and/or criteria for a data container 116 retrieved by the orchestrator computing device 102, which are used by the orchestrator computing device 102 to populate the data container 116. The initial details of given actions and/or criteria may comprise times and/or locations, and the like, at which to control the communication device 106 perform given actions. Alternatively, or in addition, initial details of given actions and/or criteria may comprise conditions associated with times and/or locations, and the like, which, when met, the communication device 106 is controlled perform given actions. Furthermore, the predictor computing device 104 may assign and/or update probabilities of any of the data containers 116 at any suitable time, for example when a data container 116 is generated and/or updated and/or changed and/or altered, and the like. Furthermore, the predictor computing device 104 may assist the orchestrator computing device 102 with alternating probabilities of any of the data containers 116.

In some examples, the historical data 124 may be populated via the predictor computing device 104 communicating with the input processing device 110, which has access to a memory 126 storing records 128 of past given events, and which may include, but is not limited to, given input associated with past given events, indications that past events occurred, and/or any other suitable information. Indeed, the input processing device 110 may receive given input associated with given events from any suitable communication devices of the system 100 (including, but not limited to, the communication device 106) and store the given input as the records 128 of the past given events. The predictor computing device 104 may periodically, and the like, synchronize the records 128 with the historical data 124, for example converting the records 128 into a format suitable for generating probabilities, and/or filtering information from the records 128 according to any suitable scheme (e.g. information from the records 128 that are irrelevant to generating probabilities may be discarded). Furthermore, probabilities of any of the data containers 116 may be updated and/or altered as the historical data 124 is updated and/or synchronized.

The historical data 124 may comprise any suitable data that may be used to generate a probability that a given event indicated by a data container 116, selected by the orchestrator computing device 102, may occur. Similarly, the historical data 124 may comprise any suitable data that may be used to generate details of given actions and/or criteria associated with a given event indicated by a data container 116.

In some examples, the historical data 124 may be specific to the communication device 106, while in other examples the historical data 124 may be more generic and/or may be for a plurality of communication devices (e.g. which may include the communication device 106).

Returning to the orchestrator computing device 102, when the retrieved data container 116 has been populated with initial probabilities and criteria, etc. the orchestrator computing device 102 may control the communication device 106 to perform given actions of the data container 116 accordingly, for example according to the criteria, for example by providing commands to the communication device 106 that are defined by actions of the data container 116, and/or by uploading an optional copy of the data container 116 to the communication device 106, which processes the data container 116 to perform the given actions.

In particular, the data container 116, once populated, may comprise instructions for performing given actions, associated with given events, when given criteria are met and according to determined probabilities that the given events may occur.

In particular examples, times and/or locations that are initially populated at the data container 116 may include, but are not limited to: a departure time and/or departure location of a flight and/or a train, and the like; an arrival time and/or arrival location, of the flight and/or the train, and the like; a check-in and/or check-out time of a hotel and/or a vehicle rental, and the like; times to request given input and/or to provide notifications, which may be relative to the aforementioned departure time or arrival time; locations to request given input and/or to provide notifications, which may depend on a location of the communication device 106 relative to the aforementioned departure location or arrival location, and/or which may depend on a location of the communication device 106 relative to locations of an electronic map (e.g. to which the orchestrator computing device 102 and/or the communication device 106 may have access via a mapping server (not depicted), and the like); and/or any other suitable times and/or locations.

However, the orchestrator computing device 102 is configured to alter the data container 116 to one or more of alter one or more of a probability, a given action and criteria associated with a given event. When such altering occurs, the behavior of the communication device 106 is also altered which may lead to more efficient collection of information by the communication device 106. Furthermore, when such altering occurs, and the orchestrator computing device 102 has previously uploaded a copy of the data container 116 to the communication device 106, the orchestrator computing device 102 synchronizes the data container 116, as altered, with the data container 116 stored at the communication device 106.

It is understood that, when the communication device 106 stores the data container 116, the communication device 106 may continue to perform given actions indicated by the data container 116 when the communication device 106 is offline and/or temporarily loses communication with the orchestrator computing device 102.

The altering of the data container 116 may occur according to data received at the orchestrator computing device 102. For example, data received from the transaction tracking device 112 may indicate that a given event of a data container 116 has occurred, such as a meal-related event. In particular, the transaction tracking device 112 may be operated by third party entity that processes transaction, such as payments for goods and services that may occur in association with credentials of the operator of the communication device 106 that are registered with the transaction tracking device 112.

In a particular example, the data container 116 may indicate that there is an initial probability of a meal-related event occurring that may be below the aforementioned threshold. However, the transaction tracking device 112 may provide data to the orchestration computing device 102 indicating that a transaction associated with the operator of the communication device 106 occurred in association with a meal-providing entity at time within a time period associated with the meal-related event. As such, the orchestrator computing device 102 may alter a probability of the meal-related event from below the threshold to above the threshold (e.g. to 100%). As such, any actions associated with the meal-related event, as defined by the data container 116 that might not have occurred at the communication device 106 before the data container 116 was altered, would subsequently occur after the data container 116 is altered.

Similarly, in another particular example, the data container 116 may indicate that there is an initial probability of a meal-related event occurring that is above the aforementioned threshold, and the data container 116 may further indicate that a given input of a given associated action that is to be collected at the communication device 106 to document the meal-related event is an image, and the like, which documents (e.g. records) that the meal-related event occurred which may include, but is not limited to, an image of a meal, an image of the meal-providing entity, an image of a receipt for the meal, and the like (e.g. which may be analyzed via optical character recognition (OCR) techniques, and the like), and/or any other suitable type of record of the meal-related event (e.g. such as a video, a file of an emailed receipt, and the like). However, the transaction tracking device 112 may provide data to the orchestration computing device 102 indicating that a transaction associated with the operator of the communication device 106 occurred in association with the meal-providing entity at time within a time period associated with the meal-related event. As such, the orchestrator computing device 102 may alter the given input from an image, to a request (e.g. at the communication device 106) to confirm that the meal-related event occurred (e.g. via selectable electronic buttons which indicate, "YES" the meal-related event occurred, or "NO" the meal-related event did not occur), which may be provided with the data received from the transaction tracking device 112, such as an amount associated with the meal-related event.

Regardless of whether information associated with the meal-related event was collected at the communication device 106, or via the transaction tracking device 112, the information may be provided to the input processing device 110, by the orchestrator computing device 102, for storage as a record 128 of the meal-related event.

However, data received at the orchestrator computing device 102 that results in an alteration of the data container 116 may be comprise any suitable data from any suitable source.

In other examples, the data received at the orchestrator computing device 102 may include a travel-based indication associated with a given event. For example, a data container 116 may indicate that a probability of a travel-based event occurring, such as a taxi ride or a limousine ride to get to an airport, or to travel from an airport, is below the aforementioned threshold. However, such a taxi or limousine ride may be booked via the event indication device 108 (e.g. after the data container 116 has been populated), and event indication device 108 may provide an indication of the booking to the orchestrator computing device 102 which alters the probability of the associated travel-based event of the data container 116 from below the threshold to above the threshold, thereby changing the behavior of the communication device 106.

However, such travel-based indications may be received from the communication device 106, which may comprise a location determining device, such as a Global Positioning System (GPS) device and the like, and/or the communication device 106 may comprise a speed measurement device, such as an electronic tachymeter, and the like. The communication device 106 may provide location updates and/or speeds to the orchestrator computing device 102 which indicates that the communication device 106 is moving above given speeds, and the like, and which may indicate that the communication device 106 is located in a vehicle, such as a taxi or a limousine, for example at a time after a flight lands, an arrival time of the flight also defined by the data container 116. Such an indication may indicate that a probability that the travel-based event occurring that includes a taxi ride or a limousine ride has increased, and the data container 116 may be updated accordingly.

In another example, the data received at the orchestrator computing device 102 may include a travel-based indication associated with a given event which may be mileage-related. For example, a data container 116 may indicate that a probability of a travel-based event occurring, such as an operator of the communication device 106 using their personal vehicle to travel to a destination. When GPS data received from the communication device 106 indicated that the communication device 106 is a home of the operator of the communication device 106 and starts to travel to the destination (e.g. as indicated by the GPS data indicating movement), the orchestrator computing device 102 may alters the probability of the associated travel-based event of the data container 116 from below the threshold to above the threshold, thereby changing the behavior of the communication device 106, for example to start automatically tracking mileage.

In other examples, the data may include a location-based indication that the communication device 106 was, and/or is, located at a given type of location associated with the given event. For example, a data container 116 may indicate that a probability of a meal-based event occurring, such as a breakfast event, is below the aforementioned threshold. However, location updates from the communication device 106 may indicate that the communication device 106 is located at a restaurant, and/or is within a given distance of a restaurant, for example at a time corresponding to a determined time of a breakfast event defined by the data container 116. As such, the orchestrator computing device 102 alters the probability of the associated meal-based event of the data container 116 from below the threshold to above the threshold, thereby changing the behavior of the communication device 106.

However, other data that may be received at the orchestrator computing device 102, that may be used to alter a data container 116 may include, but is not limited to:

-network connection indications from the communication device 106 that indicate a network to which the communication device 106 is connected, such as an airport Wi-Fi network, a roaming network, and the like, which may generally indicate a location of the communication device 106;

-communication device mode indications from the communication device 106 that indicate modes in which the communication device 106 were operated, and/or changes to such modes, such as the communication device 106 changing from a network-connected mode to a flight mode, and back to the network connected mode;

-time zone change indications from the communication device 106 that indicate a time zone in which the communication device 106 is located, which may generally indicate a location of the communication device 106;

-hotel checkout indications, car rental indications, restaurant booking indications and the like, from the event indication device 108, that indicate that associated travel-related events have occurred;
- any other suitable indications;
- data received from any other suitable sources including, but not limited to, email and/or message applications (e.g. for email and/or messages associated with an operator of the communication device 106, and which may include, but is not limited to, out of office notifications associated with the operator), calendar applications (e.g. associated with an operator of the communication device 106).

While the orchestrator computing device 102, the predictor computing device 104, the event indication device 108, and the input processing device 110 are depicted as separate from each other, they may be combined in any suitable manner at one or more computing devices and/or servers and/or cloud computing devices. Similarly, while the memories 114, 122, 118 and 126 are depicted as separate from each other, they may be combined in any suitable manner at one or more computing devices and/or servers and/or cloud computing devices.

As depicted, the communication device 106 comprises a mobile communication device, such as a cell phone, a smart phone, and the like, which includes a display screen 130, a camera 132 (e.g. a lens of which is depicted in FIG. 1), and a microphone 134. However, the communication device 106 may comprise any suitable combination of input and output devices including, but not limited to, a touch screen of the display screen 130, and the like, as well voice input devices that interface with voice-to-text applications and the like. As the communication device 106 may process a data container 116, the communication device 106 is further understood to comprise a computing device. Indeed, in some examples, the functionality of the orchestrator computing device 102, as described herein, may be performed by the communication device 106. Furthermore, the communication device 106 may comprise any suitable type of device, including, but not limited to, a computer, a laptop device, a tablet device, a mobile device, a watch device, and the like.

Furthermore, while the camera 132 is depicted as a front-facing camera, the camera 132 may comprise a rear-facing camera, and/or the communication device 106 may comprise both a front-facing camera and a rear-facing camera.

As depicted, the communication device 106 further comprises an application 136 which is depicted in dashed lines to indicate that the application 136 may be stored at the communication device 106, and processed by a controller and/or processor of the communication device 106 to communicate with the orchestrator computing device 102 and control the communication device 106 to provide notifications, request given input, and the like, for example via the display screen 130.

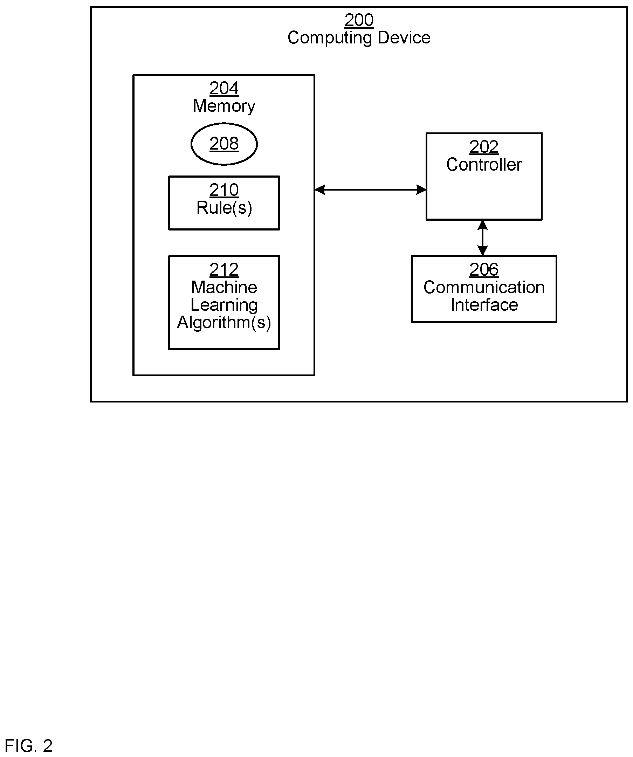

Turning to FIG. 2, before discussing the functionality of the system 100 in greater detail, certain components of a computing device 200, which may comprise the orchestrator computing device 102 and/or any suitable combination of the devices of the system 100 including, but not limited to, the communication device 106. While depicted in FIG. 2 as one device, the depicted computing device 200 may comprise one or more computing devices and/or one or more servers and/or one or more cloud computing devices that may be geographically distributed.

As shown in FIG. 2, the computing device 200 includes at least one controller 202 interconnected with a memory 204 and communication interface 206.

The controller 202 may comprise a processor and/or a central processing unit (CPU), and the like. As depicted, the memory 204 stores an application 208, and the memory 204 may be implemented as a suitable non-transitory computer-readable medium (e.g. a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The controller 202 and the memory 204 are generally comprised of one or more integrated circuits (ICs).

The controller 202 is also interconnected with the communication interface 206, which enables the computing device 200 to communicate with the other components of the system 100 for example via a network, though it is understood such communication may occur locally when the computing device 200 includes combinations of the orchestrator computing device 102, with one or more of the predictor computing device 104, the event indication device 108, and the input processing device 110.

The communication interface 206 therefore may include any necessary components (e.g. network interface controllers (NICs), radio units, and the like) to communicate via a network. The specific components of the communication interface 206 may be selected based on upon the nature of network and/or local communication between components of the system 100, and the like. The computing device 200 may also include input and output devices connected to the controller 202, such as keyboards, pointing devices, microphones, touch screens, display screens, speakers, and the like (not shown, but which may be similar to, and/or include, the display screen 130, the camera 132 and/or the microphone 134).

The components of the computing device 200 mentioned above can be deployed in a single enclosure, or in a distributed format. In some examples, therefore, the computing device 200 may include a plurality of controllers, either sharing the memory 204 and communication interface 206, or each having distinct associated memories and communication interfaces. As such, it is understood that the memory 204, and/or a portion of the memory 204, may be internal (e.g. as depicted) or external to the computing device 200; regardless, the controller 202 is understood to have access to the memory 204.

The memory 204 generally stores a plurality of computer-readable programming instructions, executable by the controller 202, in the form of various applications, including the application 208. As will be understood by those skilled in the art, the controller 202 executes the instructions of the application 208 (and any other suitable applications) in order to perform various actions defined by the instructions contained therein. In the description below, the controller 202, and more generally the computing device 200 (and/or the one or more computing devices 200), are understood to be configured to perform those actions. It will be understood that they are so configured via the execution (by the controller 202) of the instructions of the applications (e.g. the application 208) stored at the memory 204.

While not depicted, the memory 204 may comprise one or more of the memories 114, 122, 118, 126. Alternatively, one or more of the memories 114, 122, 118, 126, and/or portions thereof, may be implemented at other computing devices (not depicted) of the system 100, which may be dedicated to maintaining one or more of the memories 114, 122, 118, 126.

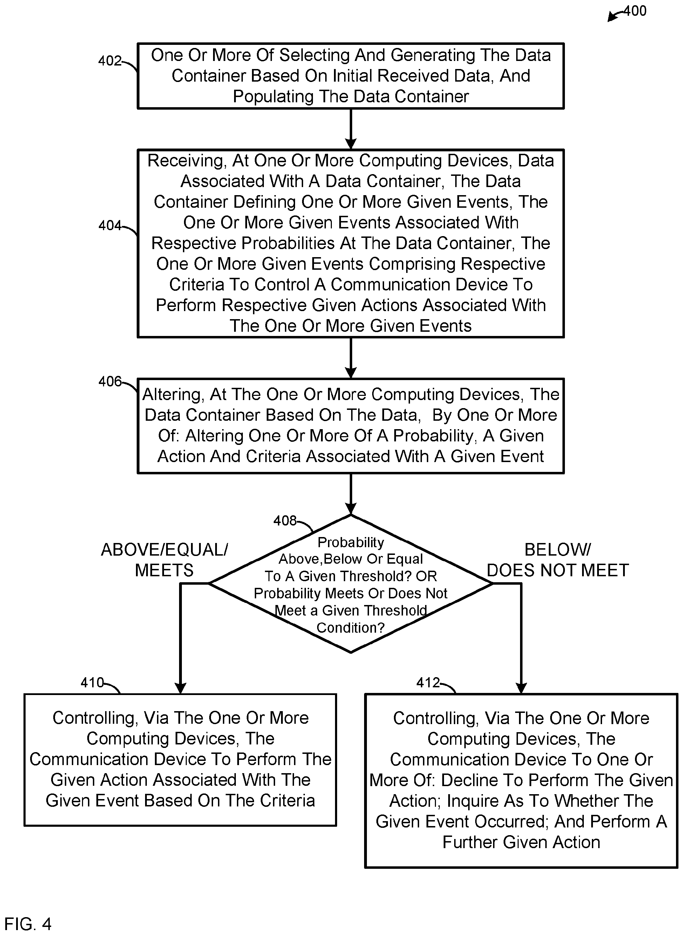

In some examples, execution of the application 208, as will be discussed below, configures the computing device 200 to implement functionality for altering data containers to control communication devices, including but not limited to, the blocks of a method set forth in FIG. 4. In some examples, the application 208 may comprise any suitable programmatic rules and/or instructions for altering data containers to control communication devices, and/or performing other functionality as described herein. Alternatively, and/or in addition, the application 208 may comprise any suitable combination of one or more machine learning algorithms for altering data containers to control communication devices, and/or performing other functionality as described herein.

For example, as depicted, the memory 204 may further store rules 210 and/or one or more machine learning algorithms 212, which may be stored (e.g. as depicted) separately from the application 208, or as modules of the application 208.

The one or more rules 210 may comprise any suitable programmatic rules and/or instructions for selecting and/or generating and/or populating and/or altering data containers 116 as described herein, such rules and/or instructions based on the historical data 124.

However, the rules 210 may further define certain limits placed on the operator of the communication device 106 such as amounts spent on meals, and the like.

Similarly, the one or more machine learning algorithms 212 may comprise any suitable set of classifiers and/or neural network layers for selecting and/or generating and/or populating and/or altering data containers 116 as described herein. Put another way, the one or more machine learning algorithms 212 may be trained to select and/or generate and/or populate and/or alter data containers 116 as described herein based on the historical data 124. However, the one or more machine learning algorithms 212 may continue to be trained, for example as the historical data 124 is updated and/or changes over time.

It is further understood that the one or more rules 210 and/or the one or more machine learning algorithms 212 may be used to perform any other suitable functionality described herein, of any one or more of the orchestrator computing device 102, the predictor computing device 104, the communication device 106, the event indication device 108, the input processing device 110, and the like.

While not depicted, when the computing device 200 includes the communication device 106, the memory 204 may further store the application 136 and/or the application 136 may be a component of the application 208.

While structure of the transaction tracking device 112 is not described in detail, the transaction tracking device 112 is understood to have a similar structure as the computing device 200, but adapted for the functionality of the transaction tracking device 112.

Attention is next directed to FIG. 3 which depicts an example data container 316 which is understood to comprise one of the data containers 116, after being retrieved from the memory 114 and populated with initial probabilities and details of given actions and/or criteria. While the depicted data container 316 is in a textual format, the depicted data container 316 may be in any suitable format including, but not limited to, a JSON (JavaScript Object Notation) format, an XML (Extensible Markup Language) format, a computer language format, and the like.

The depicted data container 316 is understood to be for given events that occur over two days (e.g. as depicted January 14, 2023 and January 15, 2023) that includes two flights and specifically a first flight on January 14, 2023 from a departure time of 08:00 to an arrival time of 09:45, and a second flight on January 15, 2023 from a departure time of 12:00 to an arrival time of 13:45. While departure and arrival locations of the flights are not depicted, the data container 316 may include such locations. Alternatively, the departure and arrival times and/or the departure and arrival locations may not be explicitly included in the data container 316, but other times (and/or criteria) in the data container 316 may be determined and/or based on the departure and arrival times, and/or the departure and arrival locations.

As depicted, the data container 316 includes four events on January 14, 2023 and four events on January 15, 2023, as well as associated probabilities, criteria and actions. It is understood that some of the events may include a plurality of criteria with different associated actions that the communication device 106 is controlled to perform, depending on which criteria are met. In some examples, no criteria may be met, in which case no associated actions are performed; in other examples, one set of criteria may be met, in which case only those associated actions are performed; and in yet further examples, more than one set of criteria may be met (e.g. at different times and/or locations), in which case all actions associated with met criteria are performed.

In the following description, it will be assumed that an example threshold, to which probabilities of the data container 316 are compared is 75%, however other example thresholds are within the scope of the present specification (e.g. 50%, 65%, 80%, 90%, amongst other possibilities). Hence, in these examples, a probability meeting a threshold condition comprises a probability being above (or equal to) 75%, and a probability not meeting a threshold condition comprises a probability being below 75%.

For example, on January 14, 2023, a first event comprises a meal-related event of "Breakfast" with an initially determined probability of 20%, and two associated criteria and respective actions:

-First criteria and a first action in which, when the departure time of the flight on January 14, 2023 is between 07:45 and 08:45 and a current time is 07:00, the communication device 106 is controlled to provide a notification of "Breakfast is $8 Max" (e.g. as the operator of the communication device 106 may have limits on an amount that may be spent on breakfast, for example as defined by the rules 210). However, any other suitable notification is within the scope of the present specification; for example, a notification that reminds the operator of the communication device 106 about limits on meals and/or that a receipt will be requested may comprise "Remember your meal reimbursement is based on real cost, we will need your receipt".

-Second criteria and a second action in which, when the departure time of the flight on January 14, 2023 is between 07:45 and 08:45 and a current time is 10:00, the communication device 106 is controlled to request a receipt for breakfast along with the text "Scan Breakfast Receipt" for example using the camera 132. The term "Scan" is used colloquially herein to refer to operation of the camera 132 to acquire an image (and/or a video) and the like). As depicted the second action includes (e.g. automatically) sending a record of the scanned breakfast receipt to the input processing device (IPD) 110, for example via the orchestrator computing device 102.

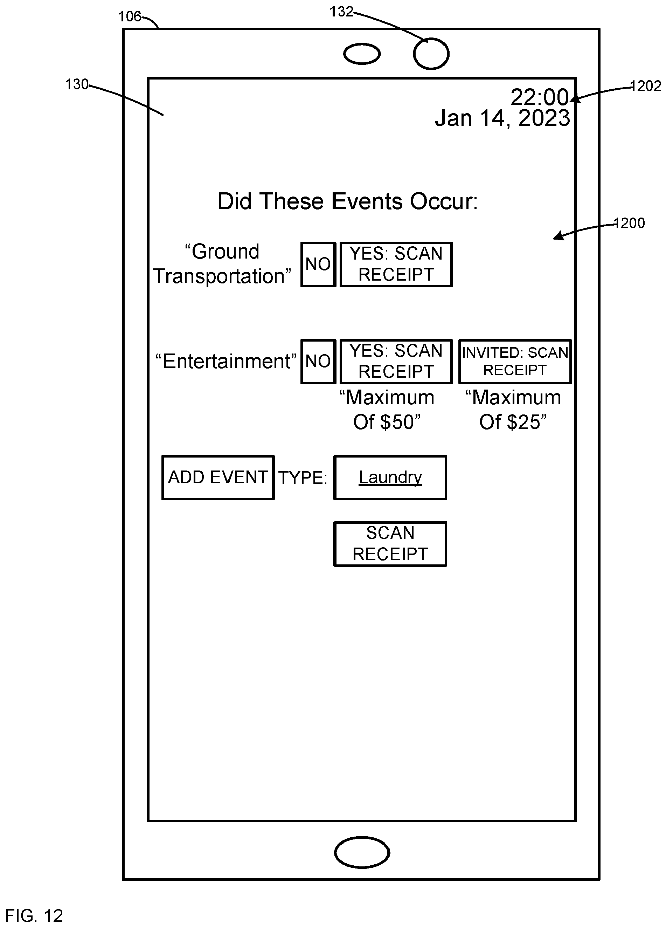

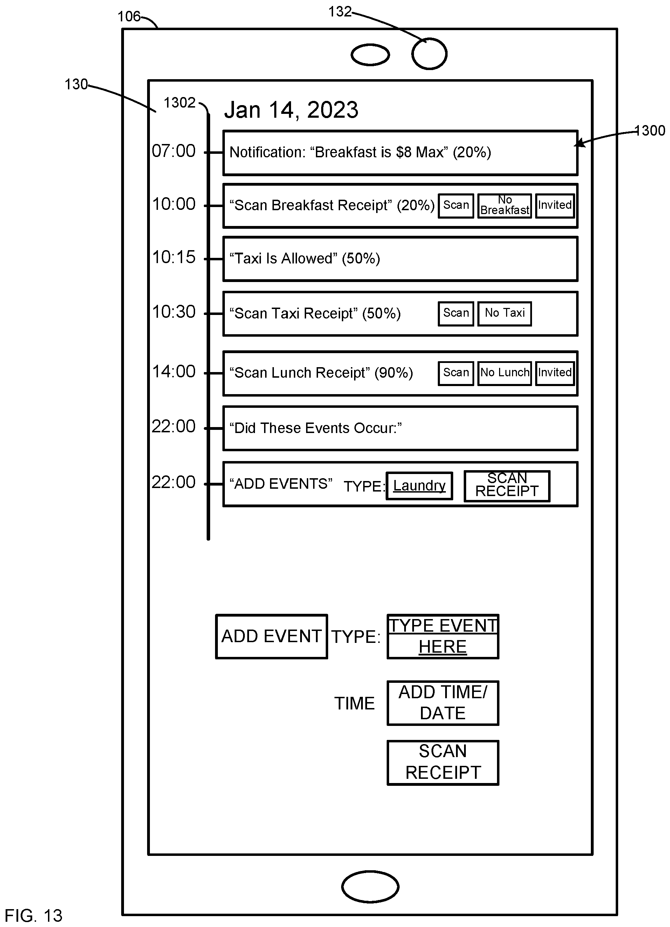

However, as the first event has a probability of 20%, which is less than the threshold of 75%, it is understood that none of the associated actions are performed and/or none of the criteria are processed to determine whether they are met or not met (e.g. unless later triggered manually by the operator of the communication device 106, as described in more detail below with respect to FIG. 12 and FIG. 13).

Continuing with events of January 14, 2023, a second event comprises a travel-related event of "Ground Transportation" with an initially determined probability of 50%, and two associated criteria and respective actions: 1

-First criteria and a first action in which, at a time of 10:15 (e.g. the flight arrival time of 09:45 plus 30 mins) and when the communication device 106 was in flight mode, the communication device 106 is controlled to provide a notification of "Taxi is Allowed".

-Second criteria and a second action in which, at a time of 10:45 (e.g. the flight arrival time of 09:45 plus 1 hour) and GPS indications and/or tachymeter indications, and the like, of the communication device 106 indicate that a speed of greater than 50 km/hr was detected, followed by a stop (e.g. a taxi may have picked up the operator of the communication device 106 and dropped the operator at a destination, such as a hotel or restaurant), the communication device 106 is controlled to request a receipt for a taxi along with the text "Scan Taxi Receipt" for example using the camera 132. As depicted the second action includes automatically sending a record of the scanned taxi receipt to the input processing device (IPD) 110, for example via the orchestrator computing device 102.

However, as the second event has a probability of 50%, which is less than the threshold of 75%, it is understood that none of the associated actions are performed and/or none of the criteria are processed to determine whether they are met or not met.

Continuing with events of January 14, 2023, a third event comprises another meal-related event of "Lunch" with an initially determined probability of 90%, and:

-One criteria and one action in which, when the arrival time of the flight on January 14, 2023 is before 11:30 and a current time is 14:00, and the communication device 106 is within 10 meters of a restaurant, for example between 11:30 and 14:00 (e.g. as determined from GPS indications from the communication device 106), the communication device 106 is controlled to request a receipt for a lunch along with the text "Scan Lunch Receipt" for example using the camera 132. However, the request may be provided with an alternative of actuating an electronic button indicating the operator of the communication device 106 was "invited" to the lunch and hence did not pay, however actuation of such an electronic button may also be performed in conjunction with scanning the lunch receipt (e.g. as the operator of the communication device 106 may have limits on gifts, such as purchased meals, that can be accepted, as defined by the rules 210). As depicted the action includes automatically sending a record of the scanned lunch receipt to the input processing device (IPD) 110, for example via the orchestrator computing device 102 as well as in indication of whether or not the electronic button was actuated. While not depicted, the request of the depicted action may be provided with an alternative to dismiss the request, which may indicate that the associated "Lunch" event did not occur and/or is not to be documented.

Furthermore, as the third event has a probability of 90%, which is greater than the threshold of 75%, it is understood that the associated actions are performed when the criteria are processed to determine whether they are met or not met.

Continuing with the events of January 14, 2023, a fourth event comprises an "Entertainment" event with an initially determined probability of 1% which is unlikely to occur as the probability of 1%, is much less than the threshold of 75%. Furthermore, in this example, the fourth event is not associated with any criteria or any actions. Nonetheless, while not depicted, at a time that is one or more at a given time, and later than the times associated with the other events on January 14, 2023, such as 22:00 on January 14, 2023, for any of the respective given events with probabilities less than the given threshold (e.g. such as the "Breakfast" event and the "Ground Transportation" event), the communication device 106 may be controlled to inquire as to whether the respective given events occurred and, if so, control the communication device 106 to request associated given input. Hence, it is understood that the "Entertainment" event is included in the data container 316 so that the communication device 106 may inquire as to whether it occurred or not so that it can be documented via input that is uploaded to the input processing device 110.

Such an inquiry may further inquire as to whether or not any other events occurred on January 14, 2023 that are not defined by the data container 316, so that associated input that document the other events (e.g. when they occurred) may be received, and uploaded to the input processing device 110. Non-limiting examples of such events, which may be understood to be unexpected and/or un anticipated events, may include, but are not limited to, purchasing fuel for a vehicle, paying for a drink with colleagues and/or clients, and the like.

Turning to January 15, 2023, there is a breakfast event having a probability of 20% which is similar to the breakfast event of January 14, 2023 except the criteria for the two actions are at exact times.

Similarly, there is a ground-transportation event having a probability of 80% which is similar to the ground-transportation event of January 14, 2023 except the criteria for the two actions are relative to the arrival time of the flight on January 15, 203.

However, the events of January 15, 2023 further include a travel-related event of "Hotel Check-Out" with an initially determined probability of 90%, and:

-One criteria and one action in which, at a time of 10:00, the communication device 106 is controlled to request a receipt for the hotel lunch along with the text "Scan Hotel Receipt" for example using the camera 132. As depicted the action includes automatically sending a record of the scanned lunch receipt to the input processing device (IPD) 110, for example via the orchestrator computing device 102.

The events of January 14, 2023 further include a "Laundry" event with an initially determined probability of 1% which is unlikely to occur as the probability of 1%, is much less than the threshold of 75%. Furthermore, in this example, the "Laundry" event is not associated with any criteria or any actions and hence may be processed similar to the "Entertainment" event.

In particular, while not depicted, at a time that is one or more of at a given time, and later than the times associated with the other events on January 15, 2023, such as 22:00 on January 15, 2023, for any of the respective given events with probabilities less than the given threshold, and/or for any of the respective given events with probabilities that do not meet he given threshold condition, the communication device 106 may be controlled to inquire as to whether the respective given events occurred and, if so, control the communication device 106 to request associated given input. Hence, it is understood that the "Laundry" event is included in the data container 316 so that the communication device 106 may inquire as to whether it occurred or not so that it can be documented via input that is uploaded to the input processing device 110.

It is understood that the events, criteria and actions of the depicted data container 316 of FIG. 3 are not meant to be exhaustive and the data container 316 may include fewer or more events, with same and/or similar and/or different criteria and/or actions.

Attention is now directed to FIG. 4, which depicts a flowchart representative of a method 400 a method for altering data containers to control communication devices. The operations of the method 400 of FIG. 4 correspond to machine readable instructions that are executed by one or more computing devices 200, for example by a controller 202 of the computing device 200. In the illustrated example, the instructions represented by the blocks of FIG. 4 are stored at the memory 204 for example, as the application 208. The method 400 of FIG. 4 is one way in which the controller 202 and/or the one or more computing devices 102 and/or the system 100 may be configured. Furthermore, the following discussion of the method 400 of FIG. 4 will lead to a further understanding of the system 100, and its various components.

The method 400 of FIG. 4 need not be performed in the exact sequence as shown and likewise various blocks may be performed in parallel rather than in sequence. Accordingly, the elements of method 400 are referred to herein as "blocks" rather than "steps." The method 400 of FIG. 4 may be implemented on variations of the system 100 of FIG. 1, as well.

At a block 402, the controller 202 and/or the one more computing devices 200 one or more of select and generate a data container 116 based on initial received data, and populating the data container, for example to produce the data container 316.

For example, the block 402 is understood to include the controller 202 and/or the one more computing devices 200: retrieving a data container 116 from the memory 114, and/or generating a data container 116, as described above, based on initial data received from any suitable data source; and populating the data container 116 for example to produce the data container 316. Indeed, the following description of the method 400 is provided with reference to the data container 316, though any other suitable data containers are within the scope of the present specification.

At a block 404, the controller 202 and/or the one more computing devices 200 receives (e.g. via the communication interface 206) data associated with the data container 316, the data container 316 defining one or more given events, the one or more given events associated with respective probabilities at the data container 316, the one or more given events comprising respective criteria to control a communication device 106 to perform respective given actions associated with the one or more given events.

As has already been described, the data may comprise one or more of: an indication of a transaction associated with the given event (e.g. as received from the transaction tracking device 112); a travel-based indication associated with the given event (e.g. as received from the communication device 106 and/or the event indication device 108); a location-based indication that the communication device 106 was located at a given type of location associated with the given event (e.g. as received from the communication device 106); and/or any other given criteria.

As has already been described, the respective criteria associated with the given action of the data container 316 may comprise one or more of: a time for the communication device 106 to perform the given action; a location for the communication device 106 to perform the given action; a detected activity or given data, received in the data, that triggers the communication device 106 to perform the given action; and/or any other given criteria. It is understood that a detected activity may include the communication device 106 moving above a given speed and then stopping (e.g. as described with respect to FIG. 3) and given data may include location data received from the communication device 106, amongst other possibilities.

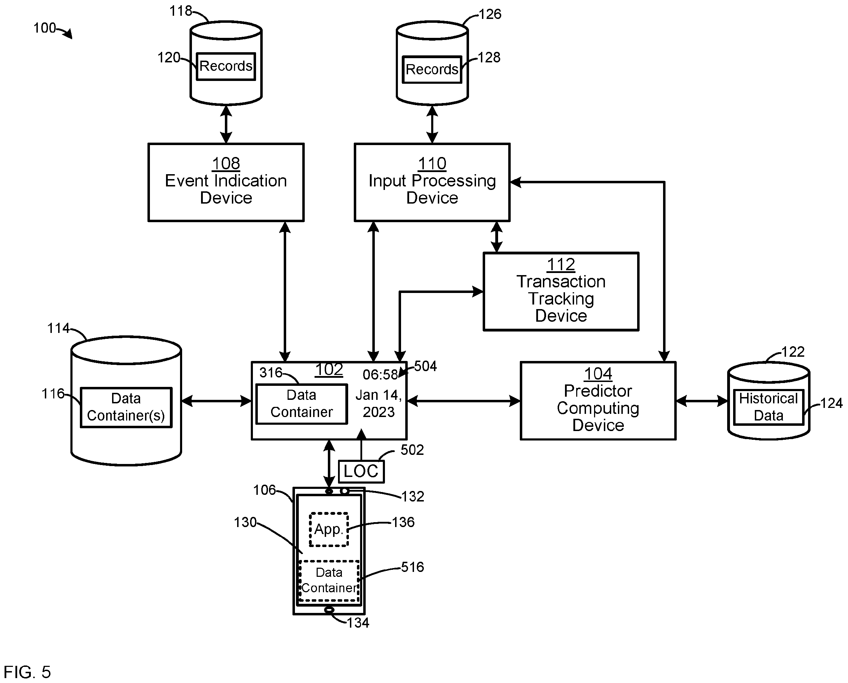

At a block 406, the controller 202 and/or the one more computing devices 200 alter the data container 316 based on the data, by altering one or more of: a probability, a given action and criteria associated with a given event of the data container 116. Examples of such altering are described below with respect to FIG. 5, FIG. 6, FIG. 7, FIG. 8, and FIG. 9, FIG. 10 and FIG. 11.

At a block 408, the controller 202 and/or the one more computing devices 200 determines whether the probability of the given event is above, below or equal to a given threshold.

Furthermore, rather than determine whether the probability of the given event is above, below or equal to a given threshold, in other examples, the block 408 may include determines whether the probability of the given event meets or does not meet a threshold condition. In some examples, meeting such a threshold condition may comprise the probability of the given event being above or equal to the given threshold, while not meeting such a threshold condition may comprise the probability of the given event being below the given threshold. However, particularly in examples using machine learning algorithms and/or neural networks and the like, the threshold condition may comprise a condition that is encoded in a machine learning classifier and/or a neural network layer, and the like. As such, throughout the present specification, the term "when the probability is above a given threshold", and the like, may be replaced with "when the probability meets a given threshold condition"; similarly, throughout the present specification, the term "when the probability is below a given threshold", and the like, may be replaced with "when the probability does not meet a given threshold condition". However, whether or not a probability meets or does not meet a given threshold condition may be determined using programmatic rules and/or algorithms, and/or using machine learning algorithms and/or neural networks and the like.

The given threshold and/or given threshold condition may be predetermined, for example by an administrator of the system 100 and/or heuristically, and stored at the application 208. Alternatively, given threshold and/or given threshold condition may be determined using machine learning and/or neural network training technqiues. It is understood that the probability that is compared to the given threshold may comprise an altered probability, for example altered at the block 406.

The given threshold and/or given threshold condition of the block 408 may be set and/or adjusted system-wide such that the given threshold and/or given threshold condition may be the same for all communication devices of the system 100. Alternatively, the given threshold and/or given threshold condition may be set and/or adjusted for the communication device 106, but not other communication devices of the system 100, such that a respective threshold and/or threshold condition may be different for some, or all, of the communication devices of the system. Alternatively, the given threshold and/or given threshold condition may be particular for given types of events such that a respective threshold and/or threshold condition may be different, or the same, for travel-related events and meal-related events. However, any suitable threshold, and/or threshold condition and/or any suitable combination of thresholds and/or threshold conditions, is within the scope of the present specification.

Furthermore, the given threshold and/or given threshold condition may include any suitable value, which may be determined heuristically and/or via machine learning algorithms (e.g. one or more of the machine learning algorithms 212, and the like), that leads to accurate and/or efficient collection of information associated with events, as described herein. For example, a threshold may initially be set at 40%, and later raised (or lowered), based on feedback based on the records 128 and/or the historical data 124, to a value that causes information to be collected in a more efficient manner. For example, with reference to FIG. 3, at a threshold of 40%, actions of the ground transportation event of January 14, 2023 may occur, but information received from the communication device 106 in response to the request to "Scan Taxi Receipt" may indicate that the ground transportation event did not occur; based on such feedback, which may be stored at the records 128 and/or the historical data 124, the given threshold may be raised from 40% to value above the 50% probability of the ground transportation event. However, such adjustment may be based on a plurality of responses from the communication device 106 received in association with a plurality of actions. Indeed, other actions may indicate that a threshold of 40% leads to accurate and/or efficient collection of information and raisin the given threshold would affect such accuracy and/or efficiency; in these examples, rather than change the given threshold, for later implementations of the data container 316, the probability of the data container 316 may be lowered to below the given threshold.

When the probability is above, or equal to, a given threshold (e.g. a decision "ABOVE/EQUAL" at the block 408), and/or the probability meets a given threshold condition, at a block 410, the controller 202 and/or the one more computing devices 200 controls (e.g. via the communication interface 206) the communication device 106 to perform the given action associated with the given event based on the criteria.

When the probability is above, or equal to, the given threshold, and/or the probability meets a given threshold condition, and when the given action includes requesting given input, the method 400 may further include, the controller 202 and/or the one more computing devices 200: receiving the given input; and providing the given input to the input processing device 110 for processing and/or storage.

In some examples, the given input, associated with the given event, and requested by the communication device 106 may comprise one or more of: a confirmation that the given event occurred, wherein details of the given event are received in the data; and a record of the given event, the record providing the details that are missing in the data.

For example, the data may be received from the transaction tracking device 112 may indicate that a transaction occurred in association with a given event, and hence the data received may comprise a record of the given event. Nonetheless, the communication device 106 may be controlled to request a confirmation that the given event occurred, for example by providing one or more electronic buttons at the display screen 130 which indicate, "YES" the given event occurred, or "NO" the given event did not occur and a selection of the "YES" electronic button may be returned to the computing device 200 as a confirmation that the given event occurred.

However, the given input may comprise a record of the given event, the record providing details that are missing in the data, such as an image, and the like, of a receipt and/or a venue, and the like, associated with the given event.

Returning to the block 408, when the probability is below the given threshold (e.g. a decision "BELOW" at the block 408), and/or the probability does not meet a given threshold condition, at a block 412, the controller 202 and/or the one more computing devices 200 controls (e.g. via the communication interface 206) the communication device 106 to one or more of: decline to perform the given action; inquire as to whether the given event occurred; and perform a further given action.

For example, when the probability is below the given threshold, the communication device 106 may be controlled to decline to perform the given action and/or not perform the given action. However, other and/or further given actions may occur.

For example, when the probability is below the given threshold, the method 400 may further include, the controller 202 and/or the one more computing devices 200, at a time that is at a given time, or later than a time associated with the given, control the communication device 106 to inquire as to whether the given event occurred; and when the given event occurred, control the communication device 106 to request associated given input. An example of such an inquiry is described below with respect to FIG. 12.

In particular, when the probability is below the given threshold, the method 400 may further include, the controller 202 and/or the one more computing devices 200, when the communication device 106 indicates that the given event occurred, control the communication device 106 to request the given input.

In some examples, when the probability is below the given threshold, the controller 202 and/or the one more computing devices 200, may perform another and/or further given action. For example, when a probability of a meal-related event is below the given threshold, an action of requesting an image of a receipt may not occur (e.g. may be declined) and/or the communication device 106 may be controlled to confirm that the meal-related event did, or did not occur, and the like.

In yet further examples, the method 400 may include the controller 202 and/or the one more computing devices 200: controlling the communication device 106 to inquire as to whether other and/or further given events occurred; and when the communication device 106 indicates that the other and/or further given events occurred, controlling the communication device 106 to request associated given input. In some of these examples, the communication device 106 may be controlled to perform such an inquiry at a given time, for example at a time associated with an end-of-day, and/or an end-of-business-day, of a user of the communication device 106, however such an inquiry may be performed, for example automatically, at any given time, for example as a notification by the application 136. An example of such an inquiry is described below with respect to FIG. 12. Furthermore, such an inquiry may be performed in conjunction with controlling the communication device 106 to inquire as to whether a given event of the data container 116 occurred (e.g. that has an associated probability that is below the threshold probability) and/or such an inquiry may be performed whether or not there are given events of the data container 116 that have associated probabilities that are below the threshold probability. Indeed, such an inquiry may occur periodically, such as daily at a given time (e.g. associated with an end-of-day, and/or end-of-business-day, of a user of the communication device 106).

Similarly, when the data container 316 includes a plurality of given events associated with probabilities below the given threshold, the method 400 may further include, the controller 202 and/or the one more computing devices 200, at a time that is at a given time, or later than respective times associated with respective given events associated with probabilities below the given threshold, controlling the communication device 106 to inquire as to whether the respective given events occurred; and when one or more of the respective given events occurred, control the communication device 106 to request associated given input.

It is understood that while the block 408, the block 410 and the block 412 are described with respect to the block 410 being implemented when the probability is equal the given threshold, in other examples, the block 412 may be implemented when the probability is equal the given threshold. Such options may be set an administrator of the system 100.

It is further understood that the blocks 408, 410, 412 may be repeated for any of the given actions of the data container 316 and furthermore that the method 400 may repeat from the block 404 as more data is received at the controller 202 and/or the one more computing devices 200.

The method 400 may include other aspects.

For example, the method 400 may include the controller 202 and/or the one or more computing devices 200 synchronizing the data container 316 with a respective data container stored on the communication device 106 (e.g. presuming the one or more computing devices 200 exclude the communication device 106).

In yet further examples, the method 400 may include the controller 202 and/or the one or more computing devices 200: controlling the communication device 106 to confirm a type of the data container 316; and when the communication device 106 indicates that the type of the data container 316 is incorrect, one or more of retrieving and generating a different type of the data container 116, as indicated by the communication device 106.

For example, the data container 116 initially retrieved and/or generated by the controller 202 and/or the one or more computing devices 200 may be based on the records 120 and/or information received from the communication device 106 and/or the transaction tracking device 112, and may be for a given time period, such as two days, and may be associated with certain travel-related events, and the like, such as two flights (e.g. as described with reference to FIG. 3). As such, the communication device 106 may be controlled to confirm that the retrieved and/or generated data container 116 for the given time period is correct or not correct. For example, rather than two days, the operator of the communication device 106 may have planned one week (or another period of time) of events, of which the two flights over the two days is only a portion. As such, input received at the communication device 106 may indicate that a data container 116 for one week (or another period of time) of events is to be retrieved, as well as types of events that may occur within the one week, etc., and a corresponding data container 116 may be retrieved.

Alternatively, and/or in addition, the data container 316 may be extended, and/or combined with other data containers 116. For example, when initially planned events extend over two days, but more planned events are added (e.g. as determined from the records 120 and/or data received from the communication device 106 and/or the transaction tracking device 112) over a longer time period (e.g. longer than two days), new events (e.g. as indicated by the records 120 and/or data received from the communication device 106), criteria and actions may be added to the data container 316 that extend over the longer time period, and probabilities may be assigned accordingly. Alternatively, the data container 316 may combined with one or mor other data containers 116 that include the new events indicated by the records 120 and/or data received from the communication device 106, and the like. Alternatively, the data container 316 may be replaced by another data container 116 that includes the events of the data container 316 as well as the new events indicated by the records 120 and/or data received from the communication device 106, and the like, and the replacement data container 116 may be populated with the events, probabilities criteria and actions that are already in the data container 316, and the new events (e.g. as indicated by the records 120 and/or data received from the communication device 106), criteria and actions may be added to the new data container 116 that extend over the longer time period, and probabilities may be assigned accordingly.

It is furthermore understood that given events associated with the data container 316 that are confirmed to have occurred (e.g. via given input) may affect probabilities of other given events of the data container 316 that may be altered at the method 400. For example, when the "Breakfast" event of January 14, 2023 occurs, the probability for the "Breakfast" event of January 15, 2023 may be altered to a higher probability. Put another way, the method 400 may further comprise the controller 202 and/or the one or more computing devices 200, altering a probability of a given event of the data container 316 on the basis of occurrences of prior given events of the data container 316.

Similarly, when a data container 116 is selected and/or generated due to a hotel booking as indicated by the records 120, and the like, the probability (e.g. initially) assigned to a "Breakfast" event" and/or a "Ground Transportation" event may be increased, relative to when a data container 116 is selected and/or generated due to a lunch event, and the like. Put another way, the method 400 may further comprise the controller 202 and/or the one or more computing devices 200, one or more of assigning a probability to a given event of the data container 316 (e.g. at the block 402) on the basis the initial received data.

In yet further examples, the method 400 may include the controller 202 and/or the one or more computing devices 200: determining that the data associated with the data container 116 is not associated with any given events defined by the data container 116 and defines a further given event; altering the data container 11 to add the further given event to the data container 116. For example, data, such as a receipt, received from the transaction tracking device 112 may indicate that the further given event has occurred (e.g. such as an unexpected filling up of a gas tank) and the further given event may be added to the data container 116, for example, with 100% probability, and with an action to confirm the amount on the receipt and/or confirm the given action via the communication device 106.

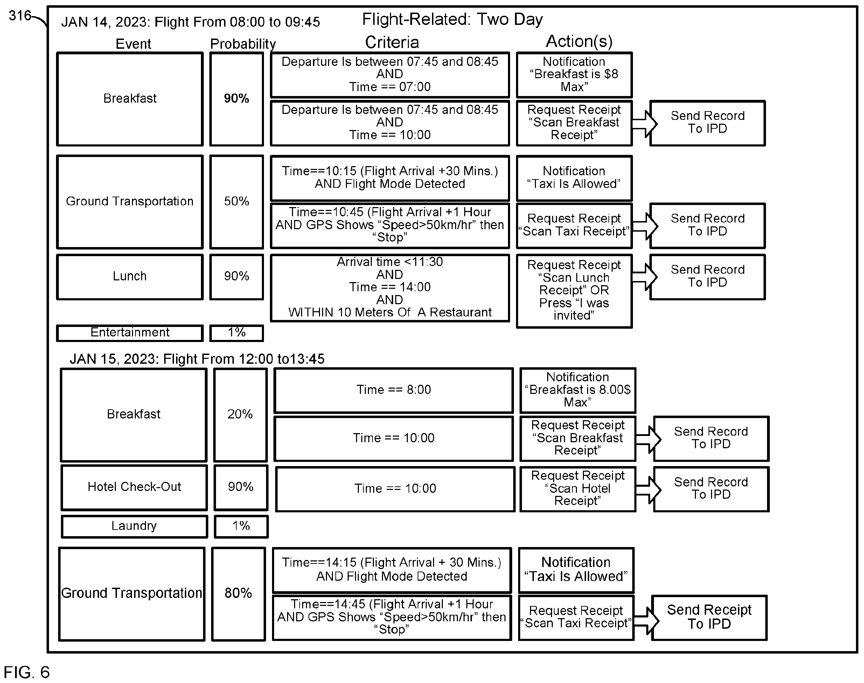

Aspects of the method 400 and/or the system 100 are next described with reference to FIG. 5, FIG. 6, FIG. 7, FIG. 8, FIG. 9, FIG. 10, FIG. 11, FIG. 12 and FIG. 13. FIG. 5, FIG. 7, FIG. 8, FIG. 9, and FIG. 11, are substantially similar to FIG. 1, with like components having like numbers. FIG. 6, and FIG, 10 are substantially similar to FIG. 3, with like components having like numbers.

Attention is next directed to FIG. 5 in which the orchestrator computing device 200 is depicted as processing the data container 316, and receiving (e.g. at the block 404 of the method 400) data 502 from the communication device 106, the data 502 comprising a location (e.g. "LOC") of the communication device 106. As depicted, the orchestrator computing device 200 is furthermore determining a current time 504 of "06:58" (e.g. on January 14, 2023), for example via a clock, and the like, of the controller 202. In the depicted examples, the orchestrator computing device 200 may determine that the communication device 106 is located at a restaurant, and hence, with reference to FIG. 6, the orchestrator computing device 200 may alter (e.g. at the block 406 of the method 400) the probability of the "Breakfast" event of January 14, 2023 of the data container 316 from 20% to 90%, and/or any other suitable probability that may be above the threshold of 75% (e.g. as determined at the block 410), such that the communication device 106 is controlled (e.g. at the block 412) to perform the associated actions.

FIG. 5 also depicts an optional copy 516 of the data container 316 that has been uploaded to the communication device 106 (e.g. using dashed lines to indicate that the copy 516 is being processed by the communication device 106). When the data container 316 at the orchestrator computing device 200 is altered, it is understood that the copy 516 (e.g. when present) is synchronized with the altered data container 316.

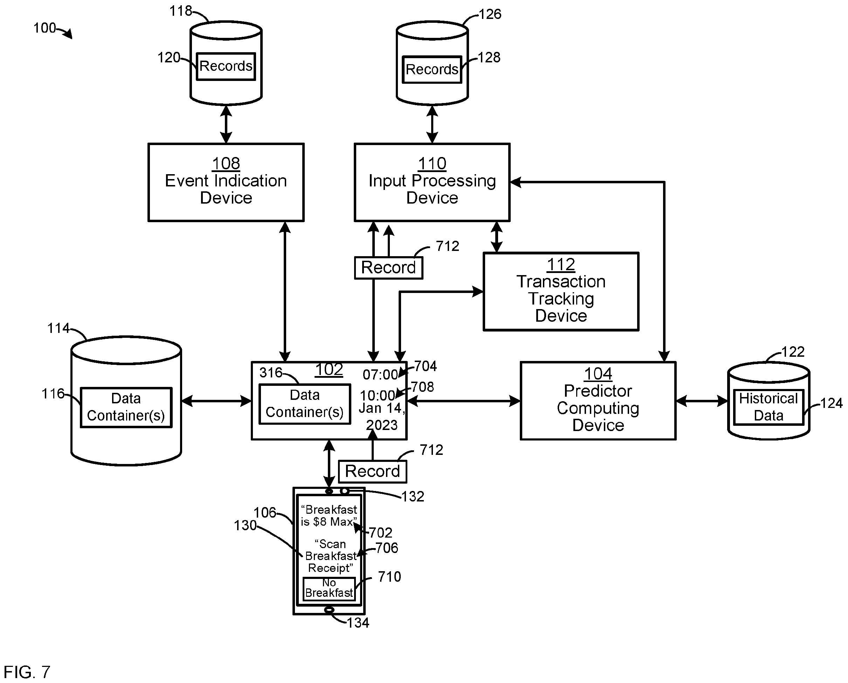

Attention is next directed to FIG. 7 that shows the communication device 106 being controlled to provide (e.g. via the application 136) a notification 702 at the display screen 130 at a current time 704 of "07:00" (e.g. on January 14, 2023), according to the first action of the "Breakfast" event of January 14, 2023, as defined by the data container 316.

FIG. 7 further shows the communication device 106 being controlled to provide (e.g. via the application 136) a request 706 for given input at the display screen 130 at a current time 708 of "10:00" (e.g. on January 14, 2023), according to the second action of the "Breakfast" event of January 14, 2023, as defined by the data container 316.

FIG. 7 further depicts an electronic button 710 which may be provided with the request 706, which, when actuated, causes the communication device 106 to provide an indication that the given "Breakfast" event did not occur (e.g. regardless of the probability being updated), and the like.

While the notification 702 and the request 706 are depicted together at the display screen 130, it is understood that they are provided at the different respective times 704, 708.

FIG. 7 further depicts a record 712 of the breakfast receipt (e.g. which may be in the form of an image, and the like), being provided from the communication device 106 to the orchestrator computing device 102, and which is provided to the input processing device 110 for processing and/or storage as a record 128 at the memory 126. While not depicted, the request 706 may be provided with any suitable combination of electronic buttons, and the like, for operating the camera 132 to acquire an image of the breakfast receipt, and the like and to cause the acquired image to be provided as the record 712 to the orchestrator computing device 102.

However, it is understood that the receipt may be acquired at the communication device 106 in any other suitable manner, which may include, but is not limited to, as an attachment (e.g. a file) to an email and/or within the body of an email, a screenshot of the display screen 130 (e.g. of a website at which the receipt is provided), a file received at the communication device 106 (e.g. from the transaction tracking device 116, and the like), amongst other possibilities. Put another way, while the example in FIG. 7 is with respect to the camera 132 acquiring an image of a receipt that is provided as the record 712 to the orchestrator computing device 102, such a receipt, and the like, may be acquired at the communication device 106 in any suitable manner and provided as the record 712 to the orchestrator computing device 102.

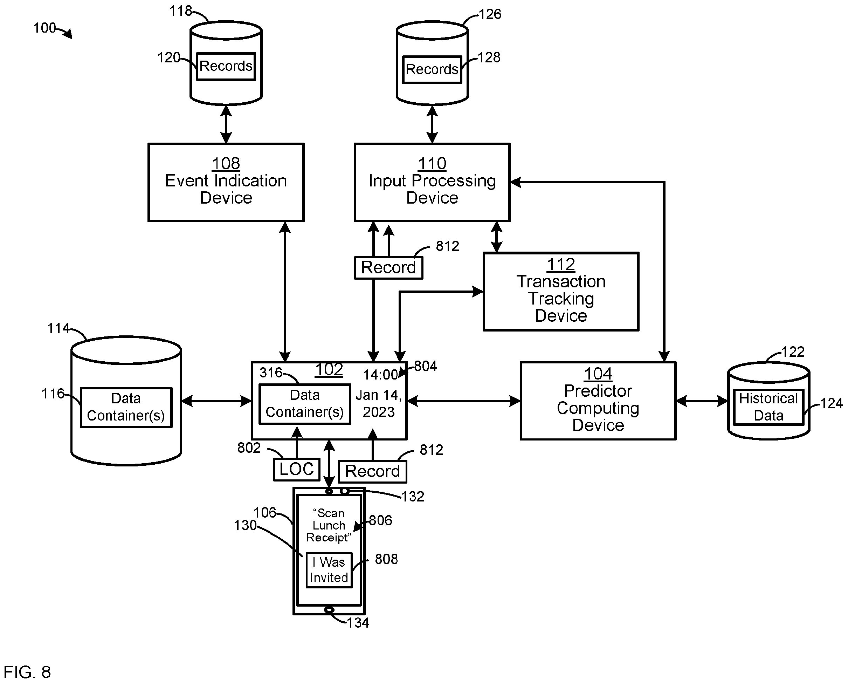

Attention is next directed to FIG. 8, which depicts the orchestrator computing receiving data 802 from the communication device 106, the data 802 comprising a location (e.g. "LOC") of the communication device 106. As depicted, the orchestrator computing device 200 is furthermore determining a current time 704 of "14:00" (e.g. on January 14, 2023), for example via a clock, and the like, of the controller 202. In the depicted examples, from the data 802, the orchestrator computing device 200 may determine that the communication device 106 is located within 10 meters of a restaurant, and hence, with reference to FIG. 3 or FIG. 6, the orchestrator computing device 200 may determine that the criteria of the "Lunch" event on January 14, 2023, of the data container 316, has been met and control the communication device 106 to provide (e.g. via the application 136) a request 806 for given input at the display screen 130 at the current time 804 of "14:00" (e.g. on January 14, 2023), according to the action of the "Lunch" event of January 14, 2023, as defined by the data container 316.

FIG. 8 further depicts an electronic button 808 which provided with the request 806, which, when actuated, causes the communication device 106 to provide an indication that operator of the communication device 106 was invited to lunch, and the like.

FIG. 8 further depicts a record 812 of a lunch receipt (e.g. which may be in the form of an image, and the like), being provided from the communication device 106 to the orchestrator computing device 102, and which is provided to the input processing device 110 for processing and/or storage as a record 128 at the memory 126. The record 812 may be further provided with an indication that operator of the communication device 106 was invited to lunch, and the like, for example when the electronic button 808 was actuated.

While not depicted, the request 806 may be provided with any suitable combination of electronic buttons, and the like, for operating the camera 132 to acquire an image of the breakfast receipt, and the like and to cause the acquired image to be provided as the record 812 to the orchestrator computing device 102.

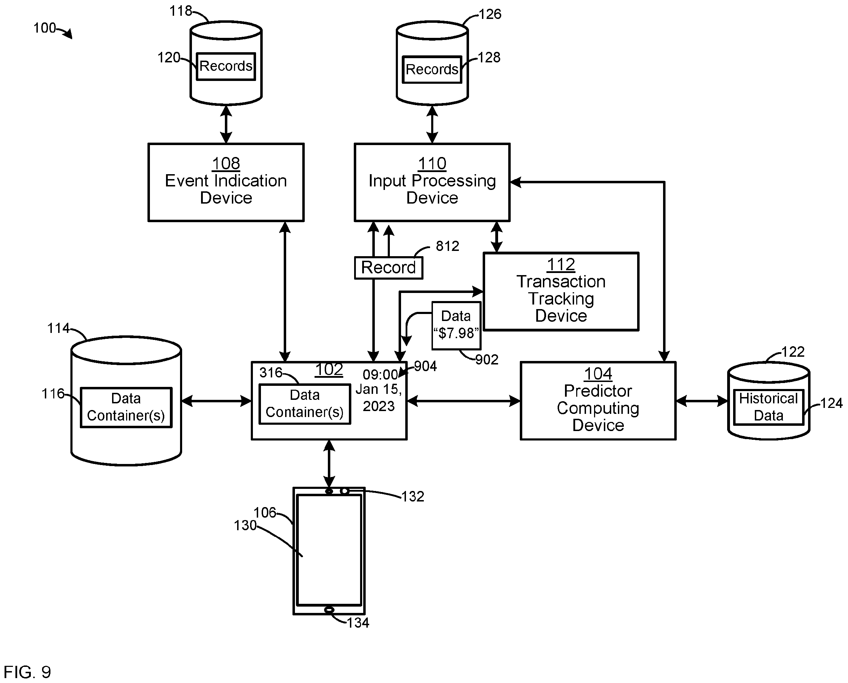

Attention is next directed to FIG. 9 in which the orchestrator computing device 200 is depicted as receiving data 902 from the transaction tracking device 112, the data 902 comprising a receipt from a breakfast-venue that is received at a time 904 of "09:00" on January 15, 2023. The data 902 includes an associated amount of "$7.98". In some examples data 902 from the transaction tracking device 112 may comprise data associated with a credit card, such as a credit card associated with an operator of the communication device 106; indeed, the data 902 may comprise a portion of feed and/or stream of credit card data received from the transaction tracking device 112.

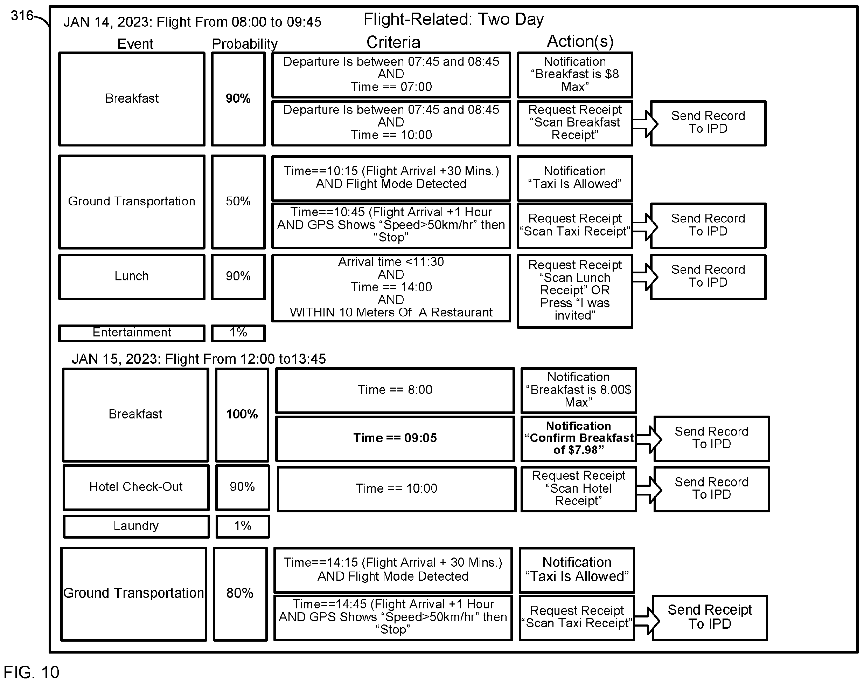

The orchestrator computing device 200 may hence process the data container 116 and, with reference to FIG. 10, determine that as the data 902 was received between 08:00 and 10:00 on January 15, 2022, the data 902 may comprise a receipt for the "Breakfast" event on January 15, 2022. As such, as depicted in FIG. 10, the orchestrator computing device 200 may alter the probability of the "Breakfast" event of January 14, 2023 of the data container 316 from 20% to 100%, and/or any other suitable probability that may be above the threshold of 75%, such that the communication device 106 is controlled (e.g. at the block 412) to perform the associated actions that meet the criteria. It is understood that as the current time is past 08:00, the first criteria is not met and hence the associated first action is not performed.

However, as also depicted in FIG. 10, the time for the second criteria has been altered from "10:00" to "09:05", and/or 5 minutes after receipt of the data 902. Furthermore the associated second action has been altered to a notification of "Confirm Breakfast of $7.98" (e.g. which includes information from the data 902).

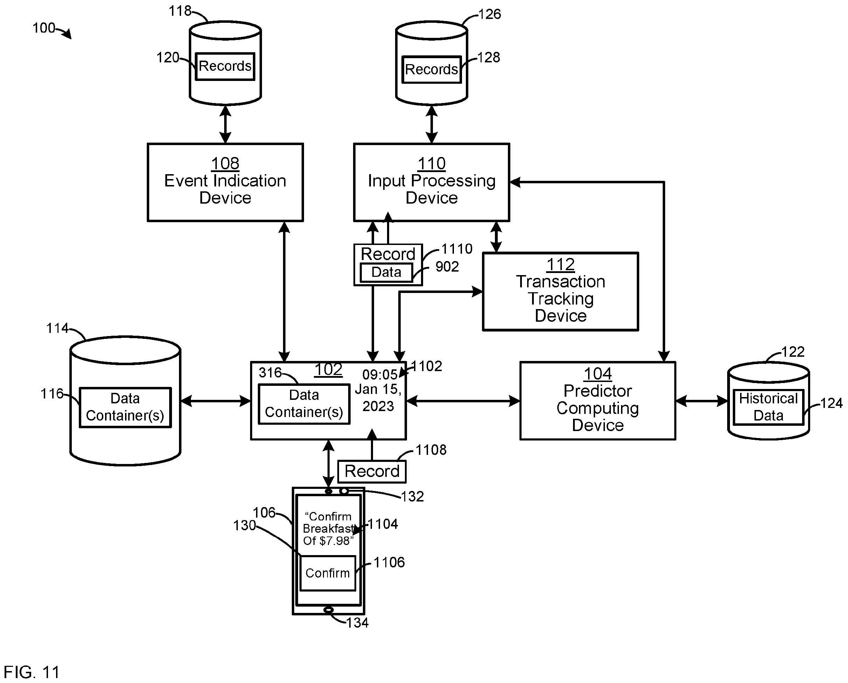

As such, with reference to FIG. 11, at a current time 1102 of "09:05" on January 15, 2023, the communication device 106 is controlled to provide a notification 1104 of "Confirm Breakfast of $7.98", with an associated electronic button 1106, which, when actuated, causes a record 1108 of the confirmation of the data 902 to be provided to the orchestrator computing device 102, which provides a record 1110 that includes the data 902 to the input processing device 110 for processing and/or storage of the data 902 as a record 128.

Any other suitable types of criteria and/or actions and/or records of given events are within the scope of the present specification. For example, criteria may define when given actions for personal-vehicle related events may occur, such as acquiring an image of mileage of a personal vehicle, and the like and/or tracking (e.g. automatically tracking) mileage of a personal vehicle, for example using a GPS device of the communication device 106, and the like.

Attention is next directed to FIG. 12 and with further reference to FIG. 6 or FIG. 10; in particular, FIG. 12 depicts the communication device 106 being controlled to inquire as to whether respective given events of the data container 316 occurred, on January 14, 2023, associated with probabilities below the given threshold, as indicated by the data container 316 in the state depicted in FIG. 6 or FIG. 10. The inquiry is provided in the form of a Graphic User Interface (GUI) 1200 at a time 1202 that is at a given time, or later than respective times associated with respective given events indicated by the data container 316. In particular, the GUI 1200 is provided at a time of "22:00" on January 14, 2023 (e.g. which may be associated with an end-of-day, and/or an end-of-business-day, of a user of the communication device 106).

As depicted, the GUI 1200 comprises a header "Did These Events Occur:" and a list of events of January 14, 2023, as defined by the data container 316, associated with probabilities less than the aforementioned given threshold. For example, the list includes (e.g. listed as text) the "Ground Transportation" event (e.g. having a probability of 50%, less than the given threshold of 75%), and the "Entertainment" event (e.g. having a probability of 1%, less than the given threshold of 75%).

Each of the listed events is provided with electronic buttons which, when actuated, provide an indication that "NO" an associated event occurred, or "YES" the associated event occurred. When the "YES" button is actuated, the "YES" button may cause the communication device 106 to provide any suitable combination of electronic buttons, and the like, for operating the camera 132 to acquire an image of an associated receipt, and the like, and to cause the acquired image to be provided to the orchestrator computing device 102, for example as a record similar to the record 712, which may be provided to the input processing device 110. As such, the "YES" button is provided with additional text of "SCAN RECEIPT", but which may be optional.

The electronic buttons associated with the "Entertainment" event include another electronic button of "INVITED", which, when actuated may indicate that the operator of the communication device 106 was invited out for entertainment. Furthermore, the "INVITED" electronic button, when actuated may cause the communication device 106 to provide any suitable combination of electronic buttons, and the like, for operating the camera 132 to acquire an image of an associated receipt, and the like, and to cause the acquired image to be provided to the orchestrator computing device 102, for example as a record similar to the record 812, which may be provided to the input processing device 110. As such, the "INVITED" button is provided with additional text of "SCAN RECEIPT", but which may be optional. It is further understood that electronic buttons described herein with respect to an operator of the communication device 106 being invited to meals and/or for entertainment, and the like, is merely one example and that electronic buttons described herein may be adapted for other scenarios, such as being "comped" tickets to a show and/or event, and the like, amongst other possibilities.

The "YES" electronic button associated with the "Entertainment" event is further provided with text of "Maximum of $50" to indicate a rule 210 (and the like) that the operator of the communication device 106 may only spend up to $50 on the associated event. Similarly, the "INVITED" electronic button associated with the "Entertainment" event is further provided with text of "Maximum of $25" to indicate a rule 210 (and the like) that the operator of the electronic device 106 may only accept up to $25 as an invited guest to the "Entertainment" event.

As depicted, the GUI 1200 further includes an electronic button "ADD EVENT" which, when actuated, enables the operator of the communication device 106 to operate the communication device 106 to generate a record of an event that was not indicated by the data container 316. The electronic button "ADD EVENT" is provided with a field of "TYPE" into which text, and the like, may be received (e.g. as depicted "Laundry", which is underlined to indicate that the text was entered into the field and is not an electronic button) to indicate a type of the event, and an electronic button of "SCAN RECEIPT" which, when actuated, may cause the communication device 106 to provide any suitable combination of electronic buttons, and the like, for operating the camera 132 to acquire an image of an associated receipt, and the like, and to cause the acquired image to be provided to the orchestrator computing device 102, for example as a record, which may be provided to the input processing device 110.

The electronic button "ADD EVENT" may be actuated any suitable number of times, to generate a record of any suitable number of events.

Furthermore, the application 136 of the communication device may be operated in different modes at the communication device 106, and changing between the different modes may occur automatically and/or upon selection of options at the application 136 (e.g. by an operator of the communication device 106 using an unput device, such as a touch screen of the display screen 130), for example using a menu system, and the like, of the application 136.

While the GUI 1200 is depicted in a particular format, the GUI 1200 may be in any suitable format. For example, the GUI 1200 may initially include an initial question and/or electronic buttons that inquires as to whether any events of a data container 116 were missed, for example due to an associated probability being below a threshold probability. When the answer to the question is "NO", the GUI 1200 may be removed from the display screen 130. However, when the answer to the question is "YES", a list of events of the data container 116 having associated probabilities below a threshold probability may be provided at the display screen 130, similar to as depicted in FIG. 12, and/or in any suitable order. For example, such events may be ordered with respect to time, or such events may be ordered with respect to probability (e.g. with higher probability events listed first and/or before lower probability events), and the like.

Attention is next directed to FIG. 13 and with further reference to FIG. 2; in particular, FIG. 13 depicts the communication device 106 being controlled to provide a GUI 1300 showing a timeline view of the events of January 14, 2023 as indicated by the data container 316 as depicted in FIG. 3. While the GUI 1300 only shows the events of January 14, 2023, the GUI 1300 may further show the events of January 14, 2023.

The GUI 1300 generally indicates the actions indicated by the data container 316 that the communication device 106 may be controlled to perform, and associated probabilities, which may be optional. While not depicted, associated criteria of the actions may also be provided.

The actions are further shown on a timeline 1302, in an order in which they may occur in time. For example, the first action of the "Breakfast" event on January 14, 2023 as indicated by the data container 316 is indicated as having a 20% probability of occurring at a time of 07:00; the type of the event (e.g. a "NOTIFICATION") and the text thereof is also depicted. In some examples, notification-type events may not appear at the timeline 1302 (e.g. notification-type events may be optional at the timeline 1302).

The second first action of the "Breakfast" event on January 14, 2023 as indicated by the data container 316 is indicated as having a 20% probability of occurring at a time of 10:00; the type of the event (e.g. a "Scan Breakfast Receipt") is also depicted, along with electronic buttons to "Scan" the receipt, indicate that "No Breakfast" occurred, and that the operator of the communication device 106 was "Invited" to the "Breakfast" event. While more electronic buttons are provided for the second action than as depicted in the request 706 FIG. 7, such electronic buttons may be optional and/or such electronic buttons may also be included with the request 706.

Similarly, at 10:15 and 10:30, the first and second actions of the "Ground Transportation" event on January 14, 2023 is indicated, along with suitable electronic buttons, and at 14:00, the action of the "Lunch" event on January 14, 2023 are indicated, along with suitable electronic buttons.

Similarly, at 10:00 the timeline 1302 of the GUI 1300 includes indications of the GUI 1200 described with reference to FIG. 12, along with a similar electronic button and field to add events. Indeed, in the GUI 1300, events may be added at any time via interaction with the depicted electronic button and field.

As depicted, the GUI 1300 further includes an electronic button "ADD EVENT" that is not associated with a given time which, when actuated, enables the operator of the communication device 106 to operate the communication device 106 to generate a record of an event that was not indicated by the data container 316 and/or at the timeline 1302. The electronic button "ADD EVENT" is provided with a field of "TYPE" into which text, and the like, may be received (e.g. as depicted "TYPE EVENT HERE", which is underlined to indicate that text is to be entered into the field and is not an electronic button) to indicate a type of the event, a field of "ADD TIME/DATE" into which text, and the like, may be received to indicate a time and/or date of the event, and an electronic button of "SCAN RECEIPT" which, when actuated, may cause the communication device 106 to provide any suitable combination of electronic buttons, and the like, for operating the camera 132 to acquire an image of an associated receipt, and the like, and to cause the acquired image to be provided to the orchestrator computing device 102, for example as a record, which may be provided to the input processing device 110. Such an added event may also be added to the timeline 1302.

However, it is understood that the GUI 1300 is merely one example of a timeline, and that a timeline may be provided in any suitable manner.

It is further understood that the GUI 1300 may be updated accordingly as the data container 316 is altered, as described herein.

As should by now be apparent, the operations and functions of the devices described herein are sufficiently complex as to require their implementation on a computer system, and cannot be performed, as a practical matter, in the human mind. In particular, computing devices, and the lie, such as set forth herein are understood as requiring and providing speed and accuracy and complexity management that are not obtainable by human mental steps, in addition to the inherently digital nature of such operations (e.g., a human mind cannot interface directly with, RAM or other digital storage, cannot transmit or receive electronic messages, among other features and functions set forth herein).

In this specification, elements may be described as "configured to" perform one or more functions or "configured for" such functions. In general, an element that is configured to perform or configured for performing a function is enabled to perform the function, or is suitable for performing the function, or is adapted to perform the function, or is operable to perform the function, or is otherwise capable of performing the function.

It is understood that for the purpose of this specification, language of "at least one of X, Y, and Z" and "one or more of X, Y and Z" can be construed as X only, Y only, Z only, or any combination of two or more items X, Y, and Z (e.g., XYZ, XY, YZ, XZ, and the like). Similar logic can be applied for two or more items in any occurrence of "at least one..." and "one or more..." language.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", and in yet further examples "within 0.5%".

Persons skilled in the art will appreciate that in some examples, the functionality of devices and/or methods and/or processes described herein can be implemented using pre-programmed hardware or firmware elements (e.g., application specific integrated circuits (ASICs), electrically erasable programmable read-only memories (EEPROMs), etc.), or other related components. In other examples, the functionality of the devices and/or methods and/or processes described herein can be achieved using a computing apparatus that has access to a code memory (not shown), which stores computer-readable program code for operation of the computing apparatus. The computer-readable program code could be stored on a computer readable storage medium, which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

Persons skilled in the art will appreciate that there are yet more alternative examples and modifications possible, and that the above examples are only illustrations of one or more examples. The scope, therefore, is only to be limited by the claims appended hereto.

## Claims

1. A method (400) comprising:
receiving (404), at one or more computing devices (200), data associated with a data container (116), the data container (116) defining one or more given events, the one or more given events associated with respective probabilities at the data container (116), the one or more given events comprising respective criteria to control a communication device (106) to perform respective given actions associated with the one or more given events;
altering (406), at the one or more computing devices (200), the data container (116) based on the data, by altering one or more of: a probability, a given action and criteria associated with a given event;
when the probability meets a given threshold condition, controlling (410), via the one or more computing devices (200), the communication device (106) to perform the given action associated with the given event based on the criteria;
when the probability does not meet the given threshold condition, controlling (412), via the one or more computing devices (200), the communication device (106) to one or more of: decline to perform the given action; inquire as to whether the given event occurred; and perform a further given action.

2. The method (400) of claim 1, wherein the respective criteria associated with the given action comprises one or more of:
a time for the communication device (106) to perform the given action;
a location for the communication device (106) to perform the given action; and
a detected activity or given data, received in the data, that triggers the communication device (106) to perform the given action.

3. The method (400) of any one of claim 1 to claim 2, further comprising:
when the probability meets the given threshold condition, and when the given action includes requesting given input:
receiving the given input; and
providing the given input to an input processing device for one or more of processing and storage,
wherein, optionally, the given input associated with the given event requested by the communication device (106) comprises one or more of: a confirmation that the given event occurred, wherein details of the given event are received in the data; and a record of the given event, the record providing the details that are missing in the data.

4. The method (400) of any one of claim 1 to claim 3, further comprising:
when the probability meets the given threshold condition, and when the given action is not associated with input:
controlling the communication device (106) to provide a notification associated with the given action.

5. The method (400) of any one of claim 1 to claim 4, further comprising:
when the probability does not meet the given threshold condition, and when the communication device (106) indicates that the given event occurred, controlling the communication device (106) to request given input.

6. The method (400) of any one of claim 1 to claim 5, further comprising:
at a time that is at a given time, or later than respective times associated with respective given events associated with probabilities that do not meet the given threshold condition, controlling the communication device (106) to inquire as to whether the respective given events occurred; and
when one or more of the respective given events occurred, controlling the communication device (106) to request associated given input.

7. The method (400) of any one of claim 1 to claim 6, wherein the data comprises one or more of:
an indication of a transaction associated with the given event;
a travel-based indication associated with the given event; and
a location-based indication that the communication device (106) was located at a given type of location associated with the given event.

8. The method (400) of any one of claim 1 to claim 7, further comprising one or more of:
controlling the communication device (106) to confirm a type of the data container (116); and when the communication device (106) indicates that the type of the data container (116) is incorrect, one or more of retrieving and generating a different type of the data container (116), as indicated by the communication device (106);
one or more of selecting and generating the data container (116) based on initial received data; and
synchronizing the data container (116) with a respective data container (116) stored on the communication device (106).

9. A device ((200) comprising:
a communication interface (206); and
a controller (202) configured to:
receive, via the communication interface (206), data associated with a data container (116), the data container (116) defining one or more given events, the one or more given events associated with respective probabilities at the data container (116), the one or more given events comprising respective criteria to control a communication device (106) to perform respective given actions associated with the one or more given events;
alter the data container (116) based on the data, by altering one or more of:
a probability, a given action and criteria associated with a given event;
when the probability meets a given threshold condition, control, via the communication interface (206), the communication device (106) to perform the given action associated with the given event based on the criteria;
when the probability does not meet the given threshold condition, control, via the communication interface (206), the communication device (106) to one or more of: decline to perform the given action; inquire as to whether the given event occurred; and perform a further given action.

10. The device (200) of claim 9, wherein the respective criteria associated with the given action comprises one or more of:
a time for the communication device (106) to perform the given action;
a location for the communication device (106) to perform the given action; and
a detected activity or given data, received in the data, that triggers the communication device (106) to perform the given action.

11. The device (200) of any of claim 9 to claim 10, wherein the controller (202) is further configured to:
when the probability meets the given threshold condition, and when the given action includes requesting given input:
receive the given input; and
provide the given input to an input processing device for one or more of processing and storage,
wherein, optionally, the given input associated with the given event requested by the communication device (106) comprises one or more of: a confirmation that the given event occurred, wherein details of the given event are received in the data; and a record of the given event, the record providing the details that are missing in the data.

12. The device (200) of any of claim 9 to claim 11, wherein the controller (202) is further configured to:
when the probability meets the given threshold condition, and when the given action is not associated with input:
control the communication device (106) to provide a notification associated with the given action.

13. The device (200) of any of claim 9 to claim 12, wherein the controller (202) is further configured to:
when the probability does not meet the given threshold condition, and when the communication device (106) indicates that the given event occurred, control the communication device (106) to request given input.

14. The device (200) of any of claim 9 to claim 13, wherein the controller (202) is further configured to:
at a time that is at a given time, or later than respective times associated with respective given events associated with probabilities that do not meet the given threshold condition, control the communication device (106) to inquire as to whether the respective given events occurred; and
when one or more of the respective given events occurred, control the communication device (106) to request associated given input.

15. The device (200) of any of claim 9 to claim 14, wherein the controller (202) is further configured to one or more of:
control the communication device (106) to confirm a type of the data container (116); and when the communication device (106) indicates that the type of the data container (116) is incorrect, one or more of retrieve and generate a different type of the data container (116), as indicated by the communication device (106);
one or more of select and generate the data container (116) based on initial received data; and
synchronize the data container (116) with a respective data container (116) stored on the communication device (106).
